# EUROPEAN PATENT APPLICATION

(11) **EP 4 506 667 A1**
(43) Date of publication of application: **12.02.2025**
(21) Application number: 24731806.6
(22) Date of filing: 11.06.2024
(51) Int. Cl.: G01J 1/02, G01J 1/42

(54) **ELECTRONIC DEVICE AND NON-TRANSITORY COMPUTER-READABLE STORAGE MEDIUM FOR IDENTIFYING INTENSITY OF LIGHT BY USING AT LEAST ONE ILLUMINANCE SENSOR**

(30) Priority: 20.06.2023 KR 20230079205; 26.07.2023 KR 20230097824
(71) Applicant: Samsung Electronics Co., Ltd, Suwon-si, Gyeonggi-do 16677 (KR)
(72) Inventor: KIM, Seonghun, Suwon-si, Gyeonggi-do 16677 (KR); WOO, Kwangtaek, Suwon-si, Gyeonggi-do 16677 (KR); SO, Hyeonbin, Suwon-si, Gyeonggi-do 16677 (KR); AN, Jinwan, Suwon-si, Gyeonggi-do 16677 (KR); OH, Deukkyu, Suwon-si, Gyeonggi-do 16677 (KR); OH, Jaemin, Suwon-si, Gyeonggi-do 16677 (KR)
(74) Representative: Appleyard Lees IP LLP
(86) International application number: PCT/KR2024/007993
(87) International publication number: WO 2024/262862

(57) **Abstract**

According to an embodiment, instructions, when executed by a processor of an electronic device, cause the electronic device to obtain a first illumination value corresponding to light received from outside of the electronic device using an illumination sensor while a foldable housing is in an unfolded state. The instructions executed by the processor cause the electronic device to obtain a second illumination value corresponding to light received from the outside of the electronic device using the illumination sensor while the foldable housing is in the folded state. The instructions executed by the processor cause the electronic device to, while the foldable housing is in the folded state, control brightness of the second display based on the second illumination value obtained from the illumination sensor located at a same side as a first display.

## Description

### [Technical Field]

The disclosure relates to an electronic device and a non-transitory computer-readable storage medium for identifying light intensity using at least one illumination sensor.

### [Background Art]

Recently, various types of portable electronic devices such as a smartphone, a tablet PC, a wireless earphone, and a smart watch have been widely spread. Some of the portable electronic devices may include a flexible display, which is deformable. Some of the portable electronic devices may include at least one illumination sensor. A portable electronic device including the flexible display may provide a folding state (e.g., fully folding), an unfolding state (e.g., fully unfolding), and an intermediate state between the folding state and the unfolding state, through the flexible display. Some of the portable electronic devices may identify external brightness using the at least one illumination sensor, independently of a state of the portable electronic device.

### [Disclosure]

### [Technical Solution]

According to an embodiment, an electronic device may comprise a foldable housing including a first housing, a second housing and a hinge rotatably connected between the first housing and the second housing such that the foldable housing is movable between a folded state, a partially folded state and an unfolded state, a first display disposed on the first housing and the second housing and configured to bend as the foldable housing is moved between the folded state and the unfolded state, a second display disposed on at least one of the first housing and the second housing at a side opposite to the first display, an illumination sensor disposed on one of the first housing and the second housing at a same side as the first display, at least one processor, and memory including one or more storage mediums storing instructions. The instructions, when executed by the at least one processor individually or collectively, may cause the electronic device to obtain a first illumination value corresponding to light received from outside of the electronic device using the illumination sensor while the foldable housing is in the unfolded state. The instructions, when executed by the at least one processor individually or collectively, may cause the electronic device to, while the foldable housing is in the unfolded state, control brightness of the first display based on the first illumination value obtained from the illumination sensor located at the same side as the first display. The instructions, when executed by the at least one processor individually or collectively, may cause the electronic device to obtain a second illumination value corresponding to light received from outside of the electronic device using the illumination sensor while the foldable housing is in the folded state. The instructions, when executed by the at least one processor individually or collectively, may cause the electronic device to, while the foldable housing is in the folded state, control brightness of the second display based on the second illumination value obtained from the illumination sensor located at the same side as the first display.

According to an embodiment, a method of an electronic device may comprise obtaining a first illumination value corresponding to light received from outside of the electronic device using an illumination sensor while a foldable housing is in an unfolded state. The method may comprise, while the foldable housing is in the unfolded state, controlling brightness of a first display based on the first illumination value obtained from the illumination sensor located at the same side as the first display. The method may comprise obtaining a second illumination value corresponding to light received from outside of the electronic device using the illumination sensor while the foldable housing is in a folded state. The method may comprise, while the foldable housing is in the folded state, controlling brightness of a second display located at a side opposite to the first display based on the second illumination value obtained from the illumination sensor located at the same side as the first display.

According to an embodiment, an electronic device may comprise a foldable housing including a first housing, a second housing and a hinge rotatably connected between the first housing and the second housing such that the foldable housing is movable between a folded state, a partially folded state and an unfolded state, a first display disposed on the first housing and the second housing and configured to bend as the foldable housing is moved between the folded state and the unfolded state, a second display disposed on at least one of the first housing and the second housing at a side opposite to the first display, an illumination sensor disposed on one of the first housing and the second housing at a same side as the first display, a hall sensor for identifying an angle between the first housing and the second housing, at least one processor, and memory including one or more storage mediums storing instructions. The instructions, when executed by the at least one processor individually or collectively, may cause the electronic device to obtain a first illumination value corresponding to light received from outside of the electronic device using the illumination sensor while the foldable housing is in the unfolded state. The instructions, when executed by the at least one processor individually or collectively, may cause the electronic device to identify that the foldable housing is moved from the unfolded state to the folded state using the hall sensor. The instructions, when executed by the at least one processor individually or collectively, may cause the electronic device to obtain a second illumination value corresponding to light received from outside of the electronic device using the illumination sensor while the foldable housing is in the folded state. The instructions, when executed by the at least one processor individually or collectively, may cause the electronic device to identify that the foldable housing is moved from the folded state to the unfolded state using the hall sensor. The instructions, when executed by the at least one processor individually or collectively, may cause the electronic device to identify whether a third illuminance value corresponding to the first illuminance value is obtained using the illuminance sensor while the foldable housing is in the folded state. The instructions, when executed by the at least one processor individually or collectively, may cause the electronic device to obtain, connection information indicating a relationship between the first illuminance value and the second illuminance value in a first state in which the third illuminance value corresponding to the first illuminance value is obtained.

### [Description of the Drawings]

FIG. 1 is a block diagram of an electronic device in a network environment, according to various embodiments.
FIG. 2 illustrates an example of a block diagram of an electronic device, according to an embodiment.
FIG. 3 illustrates an example of a state in which an electronic device obtains an illumination value using an illumination sensor, according to an embodiment.
FIG. 4 illustrates an example of a graph illustrating an illumination value according to a state obtained by an electronic device according to an embodiment.
FIG. 5 illustrates an example of a flowchart illustrating an operation of an electronic device according to an embodiment.
FIG. 6 illustrates an example of a user interface for obtaining an illumination value by an electronic device according to an embodiment.
FIGS. 7A and 7B exemplarily illustrate a deformable electronic device.
FIG. 8 illustrates an example of a flowchart illustrating an operation of an electronic device according to an embodiment.
FIG. 9 illustrates an example of a state in which an electronic device identifies an illumination value equal to or less than a threshold value, according to an embodiment.
FIG. 10 illustrates an example of an operation in which an electronic device adjusts brightness of a display based on an illumination value, according to an embodiment.
FIG. 11 illustrates an example of an exemplary flowchart illustrating an operation of an electronic device according to an embodiment.

### [Mode for Invention]

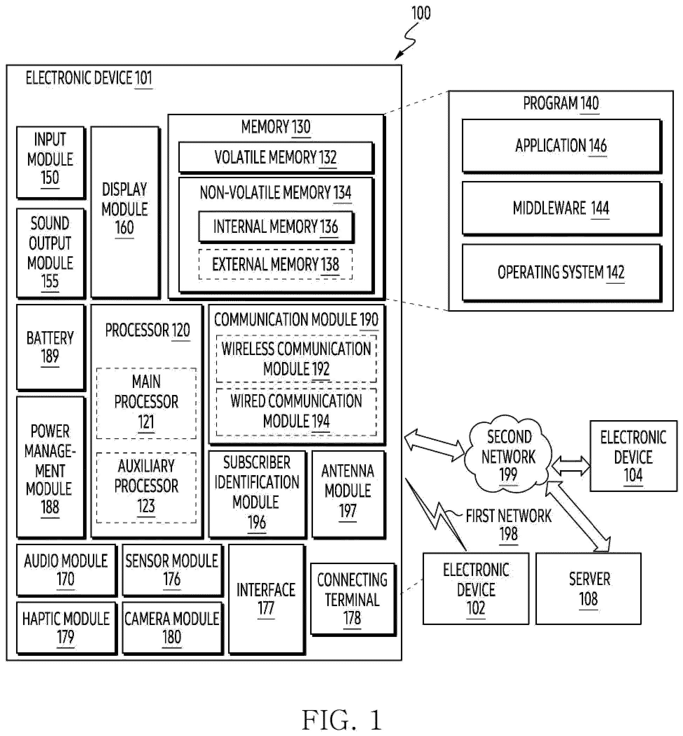

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1 st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

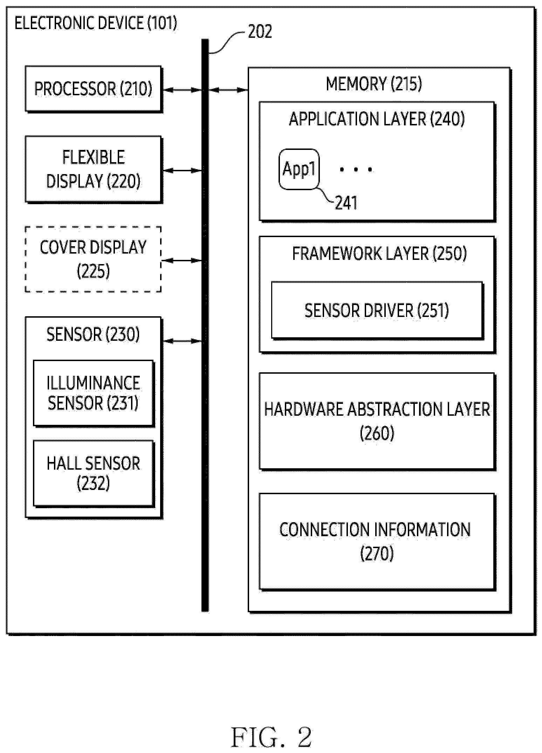

FIG. 2 illustrates an example of a block diagram of an electronic device, according to an embodiment. The electronic device 101 of FIG. 2 may include the electronic device 101 of FIG. 1. Referring to FIG. 2, according to an embodiment, the electronic device 101 may include at least one of a processor 210, a memory 215, a flexible display 220, or a sensor 230. The processor 210, the memory 215, the flexible display 220, a cover display 225, and the sensor 230 may be electronically and/or operably coupled with each other by an electronical component such as a communication bus 202. According to an embodiment, the electronic device 101 may further include a communication circuit (not shown).

In an embodiment, the operative coupling of hardware components may mean that a direct or indirect connection between hardware components is established by wire or wirelessly, so that a second hardware is controlled by a first hardware among the hardware components. Although illustrated based on different blocks, embodiments are not limited thereto, and a portion of the hardware components of FIG. 2 (e.g., at least a portion of the processor 210, the memory 215, and a communication circuit (not shown)) may be included in a single integrated circuit such as a system on a chip (SoC). The type and/or number of hardware components included in the electronic device 101 is not limited as illustrated in FIG. 2. For example, the electronic device 101 may include only a portion of the hardware illustrated in FIG. 2.

According to an embodiment, the processor 210 of the electronic device 101 may include a hardware for processing data based on one or more instructions. For example, the hardware for processing data may include an arithmetic and logic unit (ALU), a floating point unit (FPU), a field programmable gate array (FPGA), a central processing unit (CPU), and/or an application processor (AP). The number of processors 210 may be one or more. For example, the processor 210 may have a structure of a multi-core processor such as a dual core, a quad core, or a hexa core.

According to an embodiment, the memory 215 of the electronic device 101 may include a hardware component for storing data and/or an instruction inputted and/or outputted to the processor 210. The memory 215 may include a volatile memory such as a random-access memory (RAM) and/or a non-volatile memory such as a read-only memory (ROM). For example, the volatile memory may include at least one of a dynamic RAM (DRAM), a static RAM (SRAM), a Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, and an embedded multimedia card (eMMC).

According to an embodiment, the flexible display 220 of the electronic device 101 may output visualized information to a user. For example, the flexible display 220 may output the visualized information to the user by being controlled by a controller such as a graphic processing unit (GPU). The flexible display 220 may include a liquid crystal display (LCD), a plasma display panel (PDP), and/or one or more light emitting diodes (LEDs). The LED may include an organic LED (OLED). The flexible display 220 may include an electronic paper. The flexible display 220 may at least partially have a bent shape, and/or a deformable shape.

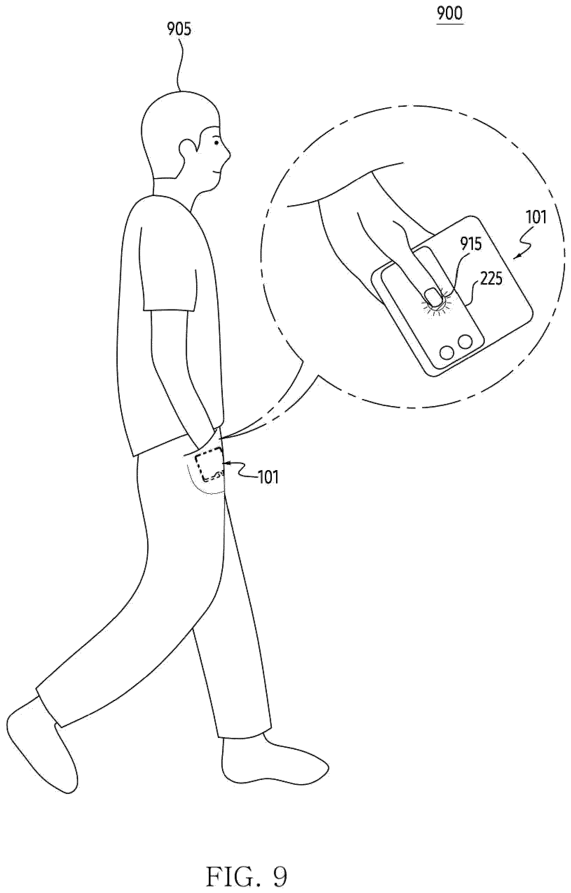

According to an embodiment, the flexible display 220 of the electronic device 101 may include a sensor (e.g., a touch sensor panel (TSP)) for detecting an external object (e.g., a user's finger) on the flexible display 220. For example, the electronic device 101 may detect an external object contacting with the flexible display 220 or floating on the flexible display 220, based on the TSP. In response to detecting the external object, the electronic device 101 may execute a function related to a specific visual object corresponding to a location of the external object on the flexible display 220 among visual objects displayed in the flexible display 220. For example, when the electronic device 101 uses an illumination sensor 231 to identify an illumination value less than or equal to a threshold value, the electronic device 101 may temporarily refrain from executing the function. For example, when identifying the illumination value less than or equal to the threshold value, the electronic device 101 may at least temporarily inactivate a touch function. The flexible display 220 may be referred to as a first display in terms of being one of a plurality of displays included in the electronic device 101. An operation in which the electronic device 101 temporarily refrains from executing the function will be described later with reference to FIG. 9.

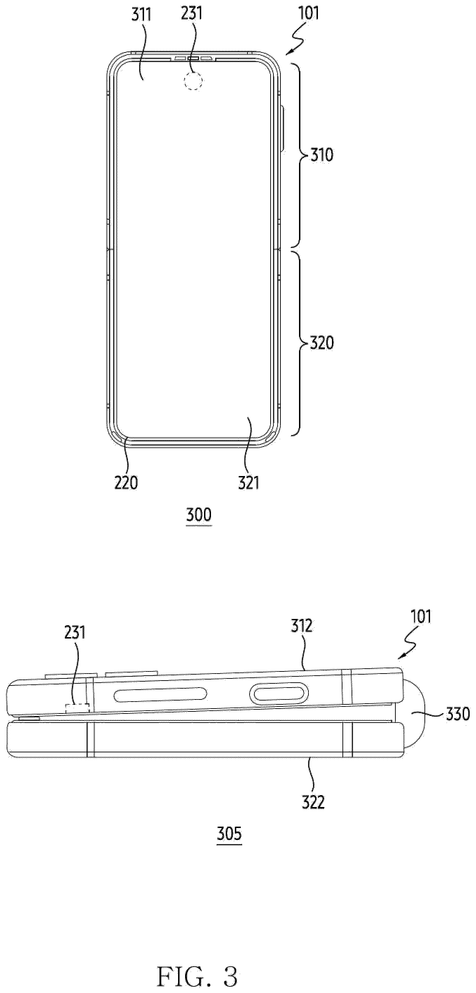

According to an embodiment, the cover display 225 of the electronic device 101 may be provided to output visualized information to a user, similarly to the flexible display 220. The cover display 225 may be disposed on a surface different from a surface of the electronic device 101 on which the flexible display 220 is disposed. The cover display 225 may be disposed on a viewable surface of a housing when the electronic device 101 is in a state in which the flexible display 220 is covered (e.g., a folding state). For example, the cover display 225 may be disposed on at least one of a first housing (e.g., a first housing 310 of FIG. 3) and a second housing (e.g., a second housing 320 of FIG. 3) of the electronic device 101 at a side opposite to the flexible display 220. The cover display 225 may be implemented similarly to the flexible display 220. Among the descriptions of the cover display 225, a description overlapped with the flexible display 220 is omitted for convenience of explanation. The cover display 225 may be referred to as a sub-display or a front display. The cover display 225 may be referred to a second display in terms of being referred to as the sub-display.

According to an embodiment, the sensor 230 of the electronic device 101 may generate electrical information capable of being processed by the processor 210 and/or the memory 215 from non-electronic information related to the electronic device 101. For example, the sensor 230 may include a global positioning system (GPS) sensor for detecting a geographic location of the electronic device 101. For example, the sensor 230 may generate information indicating the geographic location of the electronic device 101, based on a global navigation satellite system (GNSS) such as Galileo, Beidou, and Compass, in addition to the GPS method. The information may be stored in the memory 215, processed by the processor 210, or transmitted to another electronic device distinguished from the electronic device 101 through a communication circuit (not shown). The sensor 230 is not limited to the described above, and may include an image sensor, an illumination sensor, a proximity sensor, a grip sensor, and/or a ToF sensor for detecting an electromagnetic wave including light.

Referring to FIG. 2, an illumination sensor 231 and a hall sensor 232 are illustrated as examples of the sensor 230. For example, the illumination sensor 231 may output an electric signal indicating intensity (or quantity) of light reaching at least a part of the illumination sensor 231 exposed to the outside. For example, the illumination sensor 231 may output sensor data indicating brightness of ambient light of the electronic device 101. The illumination sensor 231 may include a device having a photoelectric effect in which electrons are generated and conductivity changes when receiving the ambient light. The illumination sensor 231 may be an example of a CdS sensor using cadmium sulfide as a device. The illumination sensor 231 may include a photo resistor in terms of including the device having the photoelectric effect. The illumination sensor 231 may include an ambient light sensor in terms of identifying the ambient light. The illumination sensor 231 may be disposed on at least a part of a surface of the electronic device 101 on which the flexible display 220 is disposed. The illumination sensor may be disposed on one of a first housing (e.g., the first housing 310 of FIG. 3) and a second housing (e.g., the second housing of FIG. 3), at a same side as the flexible display 220. For example, the electronic device 101 may adjust the brightness of the flexible display 220 (or the cover display 225) based on the intensity of light using the illumination sensor 231.

For example, the hall sensor 232 may include a magnet and a magnetic field sensor measuring a change in a magnetic field formed by the magnet. The magnet and the magnetic field sensor may be disposed in different portions of the housing of the electronic device 101. Based on the change in the magnetic field measured by the magnetic field sensor, the hall sensor 232 may identify a distance between the portions. In an embodiment in which the electronic device 101 includes a deformable housing (e.g., the first housing 310 and the second housing 320 of FIG. 3), the electronic device 101 may identify a shape of the housing using the hall sensor 232 that includes the magnet and the magnetic field sensor, which are disposed in different portions of the housing. For example, the hall sensor 232 may output sensor data indicating the distance and/or the shape of the housing. For example, the sensor 230 may include an inertial measurement unit (IMU). The IMU may include an acceleration sensor, a gyro sensor, a geomagnetic sensor, or any combination thereof. The acceleration sensor may output an electric signal indicating gravitational acceleration and/or acceleration of each of a plurality of axes (e.g., x-axis, y-axis, and z-axis) perpendicular to each other. The gyro sensor may output an electric signal indicating an angular velocity (e.g., an angular velocity based on roll, pitch, and/or yaw) of each of the plurality of axes. The geomagnetic sensor may output an electric signal indicating a size of the magnetic field formed in the electronic device 101 along each of the plurality of axes (e.g., x-axis, y-axis, and/or z-axis). The processor 210 may repeatedly obtain data indicating the acceleration, the angular velocity, and/or the size of the magnetic field based on a specified period (e.g., 1 millisecond) from the IMU. The processor 210 may identify parameters (e.g., a parameter indicating an angle between the first housing 310 and the second housing 320 of FIG. 3) related to the shape of the electronic device 101, by using the hall sensor 232. Based on the parameters, the processor 210 may identify a current shape of the electronic device 101, from among designated positional states (e.g., an unfolded state, an intermediate, e.g., sub-folded state, and/or a folded state) for classifying the shape (e.g. configuration) of the electronic device 101.

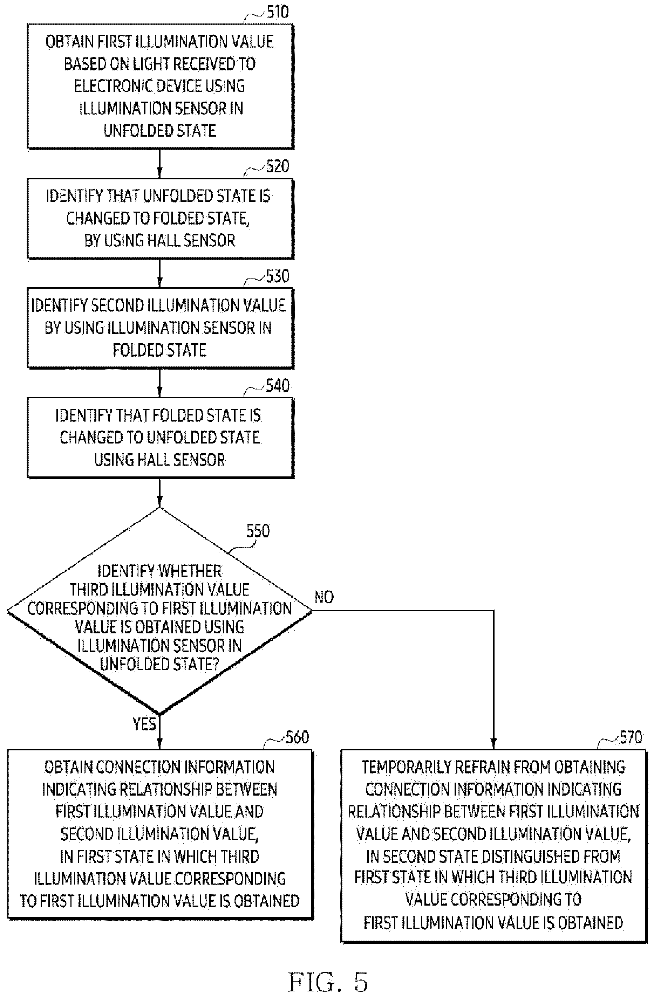

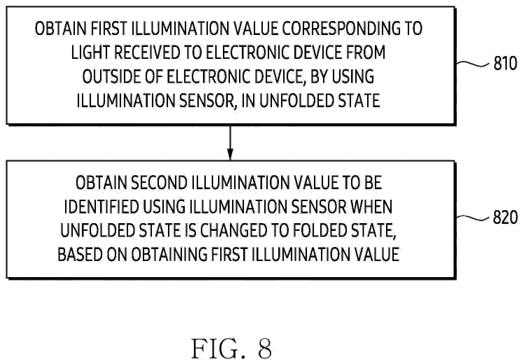

According to an embodiment, in the memory 215 of the electronic device 101, one or more instructions (or commands) indicating calculations and/or operations to be performed by the processor 210 on data may be stored. A set of one or more instructions may be referred to as firmware, operating system, process, routine, sub-routine and/or application. For example, the electronic device 101 and/or the processor 210 may perform at least one of operations of FIG. 5 or 8 when a set of a plurality of instructions distributed in a form of operating system, firmware, driver, and/or application is executed. Hereinafter, the application being installed in the electronic device 101 may be that one or more instructions provided in the form of the application are stored in the memory 215 of the electronic device 101, and it may mean that the one or more applications are stored in an executable format (e.g., a file having an extension designated by the operating system of the electronic device 101) by the processor 210 of the electronic device 101.

Referring to FIG. 2, programs installed in electronic device 101 may be classified into any one of different layers including an application layer 240, a framework layer 250, and/or a hardware abstraction layer (HAL) 260, based on a target. For example, programs (e.g., driver) designed to target hardware (e.g., the flexible display 220, and/or the sensor 230) of the electronic device 101 may be classified within the hardware abstraction layer 260. For example, programs (e.g., a sensor driver 251) designed to target at least one of the hardware abstraction layer 260 and/or the application layer 240 may be classified within the framework layer 250. Programs classified as the framework layer 250 may provide an application programming interface (API) executable based on another program.

For example, within the application layer 240, a program designed to target a user controlling the electronic device 101 may be classified. The first software application 241 is illustrated as an example of programs classified into the application layer 240, but the embodiment is not limited thereto. For example, programs (e.g., software applications) classified as the application layer 240 may call the API to cause execution of a function supported by programs classified as the framework layer 250.

Referring to FIG. 2, based on execution of the sensor driver 251, the processor 210 may control the sensor 230, and/or obtain and/or receive sensor data from the sensor 230. Based on the execution of the sensor driver 251, the processor 210 may periodically (or repeatedly) obtain the sensor data from the sensor 230. The sensor driver 251 may be one or more according to the number and/or type of the sensors 230 included in the electronic device 101. The sensor driver 251 may be a program for controlling the sensor.

For example, based on the execution of the sensor driver 251, the processor 210 may perform an operation for controlling the sensor 230. For example, based on the execution of the sensor driver 251, the processor 210 may generate a control signal for activating or inactivating the illumination sensor 231, and transmit it to the illumination sensor 231. Based on the execution of the sensor driver 251, the processor 210 may obtain information for obtaining an illumination value (or illuminance value) for the outside of the electronic device 101 from the illumination sensor 231. The illumination value may mean data indicating the intensity of light received from the outside of the electronic device 101 to the electronic device 101.

For example, based on the execution of the sensor driver 251, the processor 210 may obtain information indicating an angle of the electronic device 101 by using the hall sensor 232. The information may include an angle of the flexible display 220 and/or data to be used to calculate the angle. For example, the sensor driver 251 may be a program for controlling a sensor for measuring an angle between a first housing of the electronic device 101 and a second housing of the electronic device 101. The sensor for measuring the angle between the first housing and the second housing may include the hall sensor 232. The embodiment is not limited thereto, and the sensor for measuring the angle between the first housing and the second housing may include an IMU disposed in each of the first housing and the second housing.

For example, the electronic device 101 may identify illumination values using the illumination sensor 231 according to a state of the electronic device 101 identified using the hall sensor 232. The electronic device 101 may obtain connection information 270 indicating a relationship between illumination values identified according to the state. Hereinafter, an example of an operation in which the electronic device 101 obtains the correlation information 270 will be described later with reference to FIG. 3.

FIG. 3 illustrates an example of a state in which an electronic device obtains an illumination value using an illumination sensor, according to an embodiment. An electronic device 101 of FIG. 3 may include the electronic device 101 of FIGS. 1 and 2. Referring to FIG. 3, according to an embodiment, a housing of the electronic device 101 may include a first housing 310, a second housing 320, and a folding housing 330 for rotatably coupling the first housing 310 and the second housing 320. For example, the housing of the electronic device 101 may be referred to as a foldable housing in terms of including a hinge (or hinge structure) rotatably connected between the first housing 310 and the second housing 320 to movable between a folded state, a partially folded state and an unfolded state.

The folding housing 330 may be referred to as a hinge assembly in terms of including a hinge structure rotating the first housing 310 and the second housing 320. For example, the electronic device 101 may include the first housing 310 including a first surface 311 and a second surface 312 opposite to the first surface 311. The electronic device 101 may include the second housing 320 including a third surface 321 and a fourth surface 322 opposite to the third surface 321. By rotatably connecting the first housing 310 and the second housing 320, the electronic device 101 may include a folding housing 330 capable of switching to an unfolding state 300 in which a direction in which the first surface 311 faces is the same as a direction in which the third surface 321 faces and a folding state 305 in which the direction in which the first surface 311 faces is opposite to the direction in which the third surface 321 faces. The flexible display 220 may be disposed on the first surface 311 and the third surface 321, across the folding housing 330. For example, the flexible display 220 may be disposed on the first housing 310 and the second housing 320 and may be configured to bend according to moving the housing of the electronic device 101 between the folded state and the unfolded state.

A relative position, angle, shape, and/or distance of the first housing 310 and the second housing 320, which are rigid bodies, may be changed by an external force, by the folding housing 330. A folding axis formed in the folding housing 330 may be a rotation axis of the first housing 310 and the second housing 320. As the first housing 310 and/or the second housing 320 rotates with respect to the folding axis, an angle between the first housing 310, the folding housing 330, and the second housing 320 may be changed. For example, the electronic device 101 may include a flexible display 220 disposed on a surface (e.g., a front surface of the electronic device 101) of the first housing 310 and the second housing 320. For example, the flexible display 220 may be disposed from the first housing 310 to the second housing 320 across the folding housing 330. Hereinafter, an angle between the first housing 310 and the second housing 320 may correspond to an angle between the first surface 311 of the first housing 310 and the third surface 321 of the second housing 320 in which the flexible display 220 capable of being folded by the folding axis of the folding housing 330 is disposed. The state 300 of the electronic device 101 in which the angle is substantially straight angle (e.g., about 180 °) may be referred to as a fully unfolded state, an opened state, an unfolding state, an unfolded state, a flat state, and/or a planar state. In the state 300, the flexible display 220 disposed from the first housing 310 to the second housing 320 may have a substantially flat shape. In the state 300, a single plane may be formed on a front surface (e.g., the first surface 311 and the third surface 321) of the electronic device 101 on which the flexible display 220 is disposed. For example, the state 305 of the electronic device 101 in which the angle between the first housing 310 and the second housing 320 is substantially 0 ° may be referred to as a fully folded state, a folding state, a folded state, and/or a closed state. In the state 305, the flexible display 220 may be fully visually covered by the first housing 310 to the second housing 320. For example, in the state 305, an area of the flexible display 220 of electronic device 101 which is exposed to the outside may be substantially zero. The electronic device 101 may identify a state of the electronic device 101 by obtaining the angle between the first housing 310 and the second housing 320 by using the hall sensor 232. The electronic device 101 may identify intensity of lights according to a state of the electronic device 101, in the same environment. The electronic device 101 may identify a relationship between lights according to the state. The electronic device 101 may identify the intensity of light in a sub-folding state (or a partially folding state) (e.g., a state between a folded state and an unfolded state).

According to an embodiment, in the state 300, the electronic device 101 may identify the intensity of external light of the electronic device 101 by using the illumination sensor 231. The electronic device 101 may identify the intensity of light received from outside the electronic device 101. For example, the illumination sensor 231 of the electronic device 101 may be disposed in at least one of the first surface 311 of the first housing 310 or the third surface 321 of the second housing 320. For example, the illumination sensor 231 may be disposed on a side of the first housing 310 or a side of the second housing 320. For example, the illumination sensor 231 may be disposed on the second surface 312 opposite to the first surface 311 of the first housing 310. A location where the illumination sensor 231 is disposed in the electronic device 101 is not limited to the above-described example.

The electronic device 101 may identify the intensity of light received to the electronic device 101 based on a specified period, by using the illumination sensor 231. The electronic device 101 may indicate the intensity of light by using an illumination value. The electronic device 101 may obtain at least one illumination value indicating an average value among a plurality of illumination values identified using the illumination sensor 231. The electronic device 101 may obtain at least one illumination value indicating a maximum value (or a minimum value) among the plurality of identified illumination values based on the specified period. The electronic device 101 may identify the obtained at least one illumination value as a first illumination value corresponding to the state 300.

For example, in the unfolded state 300, the electronic device 101 may adjust brightness of the flexible display 220, based on the first illumination value obtained from the illumination sensor 231 located at the same side as the flexible display 220.

According to an embodiment, the electronic device 101 may identify that the state 300 is changed to the state 305 using the hall sensor. In the state 305, the electronic device 101 may obtain a second illumination value by using the illumination sensor 231. In the state 305, the electronic device 101 may obtain the second illumination value corresponding to the light received from the outside of the electronic device 101 by using the illumination sensor 231. For example, in the state 305, at least a part of the third surface 321 of the second housing 320 of the electronic device 101 may cover at least a part of the first surface 311 of the first housing 310. Since the first surface 311 and the third surface 321 are covered with each other, the first illumination value obtained in the state 300 may be relatively larger than the second illumination value obtained in the state 305. The second illumination value may be relatively smaller than the first illumination value. For example, the first illumination value may be greater than the second illumination value by a first multiple (e.g., about 2000 times) to a second multiple (e.g., about 5000 times). For example, since the first surface 311 and the third surface 321 are covered with each other in the state 305, the first illumination value identified in the state 300 may accurately indicate the intensity of the external light of the electronic device 101 than the second illumination value identified in the state 305.

For example, in the state 305, the electronic device 101 may adjust brightness of a cover display (e.g., the cover display 225 of FIG. 2) based on the second illumination value obtained from the illumination sensor 231 located at the same side as the flexible display 220. However, it is not limited thereto.

According to an embodiment, after obtaining the first illumination value and the second illumination value, the electronic device 101 may identify that the state 305 is changed to the state 300 using the hall sensor. The electronic device 101 may obtain a third illumination value in the state 300 by using the illumination sensor 231. After obtaining the first illumination value and the second illumination value, in the state 300, the electronic device 101 may identify that the third illumination value corresponds to the first illumination value. For example, the third illumination value may be the same as the first illumination value. For example, in the state 300 the electronic device 101 may obtain a plurality of illumination values based on a specified period, and identify an average value among the plurality of illumination values as the third illumination value. The electronic device 101 may obtain the third illumination value by removing a maximum value and/or a minimum value from among the plurality of illumination values obtained based on the specified period. The electronic device 101 may improve reliability of the third illumination value by removing the maximum value and/or the minimum value from among the plurality of illumination values.

For example, in the state 300, the electronic device 101 may obtain connection information (e.g., the connection information 270 of FIG. 2) indicating a relationship between the first illumination value and the second illumination value, based on identifying the third illumination value corresponding to the first illumination value. The connection information may include data indicating a connection between the first illumination value identified in the state 300 and the second illumination value identified in the state 305 by the electronic device 101 located in the same environment. For example, when the first illumination value is identified in the state 300, the electronic device 101 may infer that the second illumination value will be obtained using the connection information in the state 305. The connection information may be referred to as association information. For example, when the second illumination value is identified in the state 305, the electronic device 101 may infer that the first illumination value will be obtained in the state 300. The electronic device 101 may identify the first illumination value in the state 305 by using the connection information. The connection information may be referred to as illumination setting information, illumination prediction value information, connection data, and/or illumination information, in terms of including illumination values.

For example, when the third illumination value different from the first illumination value is obtained in the state 300 after obtaining the first illumination value and the second illumination value, the electronic device 101 may remove the first illumination value and the second illumination value. When the third illumination value different from the first illumination value is obtained, the electronic device 101 may temporarily refrain from performing an operation for obtaining connection information. When the third illumination value different from the first illumination value is obtained, the electronic device 101 may initiate performing the above-described operation for obtaining the connection information based on the third illumination value. However, it is not limited thereto.

As described above, according to an embodiment, the electronic device 101 may accurately obtain an illumination value by controlling one illumination sensor 231 disposed on at least one of the first surface 311 and the third surface 321, independently of the state (e.g., the state 300 or the state 305) of the electronic device 101. Since the electronic device 101 may obtain an illumination value by controlling one illumination sensor 231, the current consumption of battery may be reduced compared to a case of using two or more illumination sensors 231.

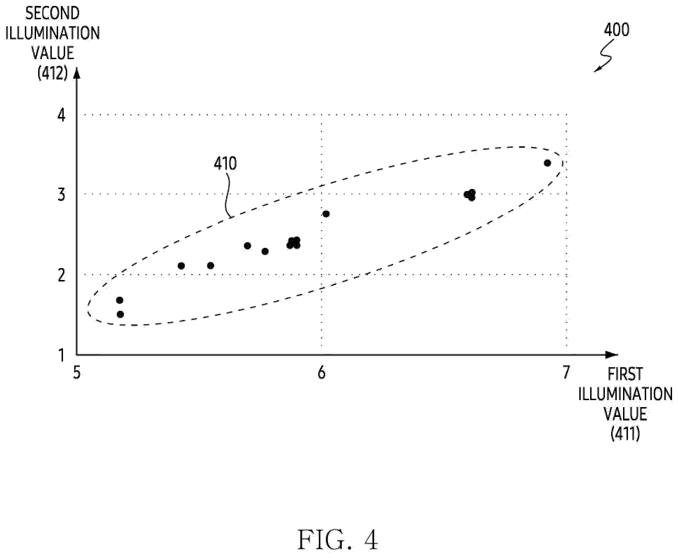

FIG. 4 illustrates an example of a graph illustrating an illuminance value according to a state obtained by an electronic device according to an embodiment. An electronic device 101 of FIG. 4 may include the electronic device 101 of FIGS. 1 to 3. Referring to FIG. 4, an exemplary graph 400 including illumination values included in connection information 270 is illustrated. The graph 400 may include data 410 indicating a relationship between a first illumination value 411 obtained by the electronic device 101 in a state 300 and a second illumination value 412 obtained by the electronic device 101 in a state 305, within the same environment. The values included in the graph 400 may be obtained based on a common logarithm.

According to an embodiment, in the graph 400, the first illumination value 411 may have a range between a first value (e.g., about 5) and a second value (e.g., about 7). The second illumination value 412 may have a range between a third value (e.g., about 1) and a fourth value (e.g., about 4). The data 410 may indicate the second illumination value 412 with respect to the first illumination value 411. For example, the data 410 may be obtained based on a 2-dimensional coordinate system configuring with the first illumination value 411 and the second illumination value 412. A value of the data 410 may be obtained based on the 2-dimensional coordinate such as (the first illumination value, the second illumination value). As an example, referring to the graph 400, since light is received based on substantially the same transmittance by using an illumination sensor in the state 300 and the state 305, the electronic device 101 may obtain linear data 410.

For example, referring to the graph 400 based on the common logarithm, a difference between the first illumination value 411 and the second illumination value 412 may have a value between about 3.3 and 3.7. Substantially, the difference between the first illumination value 411 and the second illumination value 412 may have a value between about 2000 and 5000 times. When the second illumination value 412 is identified using the graph 400, the electronic device 101 may obtain the first illumination value 411 corresponding to the second illumination value. For example, a percentage value between a first percentage value (e.g., about 0.02%) to a second percentage value (e.g., about 0.05%) of light received to the electronic device 101 in the folding state of the electronic device 101 (e.g., the state 305 of FIG. 3) may be an example of light received to the electronic device 101 in the unfolding state (e.g., the state 300 of FIG. 3). The average of the first percentage value and the second percentage value may be a third percentage value (e.g., about 0.035%) based on the arithmetic mean and a fourth percentage value (e.g., about 0.032%) based on the harmonic mean. The electronic device 101 may identify the difference between the first illumination value 411 and the second illumination value 412 on average, based on at least one of the third or fourth percentage values. For example, when the second illumination value 412 is identified as a first value (e.g., 1 lux) in the folding state (e.g., the state 305 of FIG. 3) using the graph 400, the electronic device 101 may infer the first illumination value 411 to be identified in the unfolding state (e.g., the state 300 of FIG. 3) as a second value (e.g., 3000lux). The electronic device 101 may precisely classify the illumination value based on the resolution of a sensor (e.g., the sensor 230 of FIG. 2).

As described above, according to an embodiment, the electronic device 101 may identify illumination values according to a state (e.g., the folding state or the unfolding state) within the same environment, by using the graph 400 indicating connection information (e.g., the connection information 270 of FIG. 2). When a second illumination value is identified in the unfolding state within the same environment, the electronic device 101 may infer a first illumination value corresponding to the second illumination value. The electronic device 101 may identify the intensity of the external light of the electronic device 101 by using one illumination sensor using the graph 400, in a state in which the one illumination sensor is covered (e.g., the folding state).

FIG. 5 illustrates an example of a flowchart illustrating an operation of an electronic device according to an embodiment. An electronic device 101 of FIG. 5 may include the electronic device 101 of FIGS. 1 to 4. At least one of operations of FIG. 5 may be performed by the electronic device 101 of FIG. 2 or the processor 210 of FIG. 2. Each of operations of FIG. 5 may be performed sequentially, but is not necessarily performed sequentially. For example, the sequence of each operation may be changed, and at least two operations may be performed in parallel.

Referring to FIG. 5, according to an embodiment, in operation 510, the processor may obtain a first illumination value based on light received to the electronic device using an illumination sensor in the unfolding state. The processor may obtain a first illumination value indicating the intensity of the light by controlling the illumination sensor based on execution of a sensor driver 251. For example, the processor may obtain the first illumination value in a background state while a user of the electronic device 101 uses the electronic device 101. For example, the processor may obtain the first illumination value through a user interface for obtaining connection information (e.g., the connection information 270 of FIG. 2).

For example, in the unfolding state, the processor may identify a plurality of illumination values using the illumination sensor based on a specified period. The processor may obtain the first illumination value indicating an average value among the plurality of illumination values.

Referring to FIG. 5, according to an embodiment, in operation 520, the processor may identify that the unfolded state is changed to the folded state, by using a hall sensor. The processor may identify that an angle between a first housing (e.g., the first housing 310 of FIG. 3) and a second housing (e.g., the second housing 320 of FIG. 3) is changed by an external force, by using the hall sensor. The processor may identify the unfolded state based on identifying that an angle between the first housing and the second housing is a specified angle (e.g., 0°).

Referring to FIG. 5, according to an embodiment, in operation 530, the processor may identify a second illumination value by using the illumination sensor in the folded state. The processor may identify the second illumination value in the folded state in which the illumination sensor is shielded. When the illumination sensor is disposed on the first surface 311 of FIG. 3 of the first housing 310 of FIG. 3, the illumination sensor may be shielded by the third surface 321 of FIG. 3 of the second housing 320 of FIG. 3 in the folded state.

Referring to FIG. 5, according to an embodiment, in operation 540, the processor may identify that the folded state is changed to the unfolded state using the hall sensor. The processor may identify that an angle between a first housing (e.g., the first housing 310 of FIG. 3) and a second housing (e.g., the second housing 320 of FIG. 3) is changed by an external force, by using the hall sensor. The processor may identify the unfolded state, based on identifying that the angle between the first housing and the second housing is a specified angle (e.g., 180 °).

Referring to FIG. 5, according to an embodiment, in operation 550, the processor may identify whether a third illumination value corresponding to the first illumination value is obtained using the illumination sensor in the unfolded state. For example, the processor may identify whether the third illumination value obtained in operation 550 is the same as the first illumination value obtained in operation 510.

Referring to FIG. 5, according to an embodiment, when the third illumination value corresponding to the first illumination value is obtained (operation 550-YES), in operation 560, the processor may obtain connection information indicating a relationship between the first illumination value and the second illumination value in a first state in which the third illumination value corresponding to the first illumination value is obtained. For example, when the first illumination value and the third illumination value are the same, the processor may identify that the first illumination value and the second illumination value are obtained within the same environment. The same environment may indicate an environment in which the intensity of external light of the electronic device is the same. The connection information may include data 410 included in the graph 400 of FIG. 4.

Referring to FIG. 5, according to an embodiment, in operation 570, when the third illumination value different from the first illumination value is obtained (operation 550-NO), the processor may temporarily refrain from obtaining connection information indicating the relationship between the first illumination value and the second illumination value in a second state distinguished from the first state in which the third illumination value corresponding to the first illumination value is obtained. The second state may include a state in which the processor identifies the third illumination value different from the first illumination value. The processor may infer that the external environment of the electronic device has changed while performing operations 510 to 550, in the second state of identifying the third illumination value distinguished from the first illumination value. For example, when the third illumination value different from the first illumination value is obtained, the processor may initiate performing the above-described operation (e.g., operation 510) to obtain the connection information based on the third illumination value.

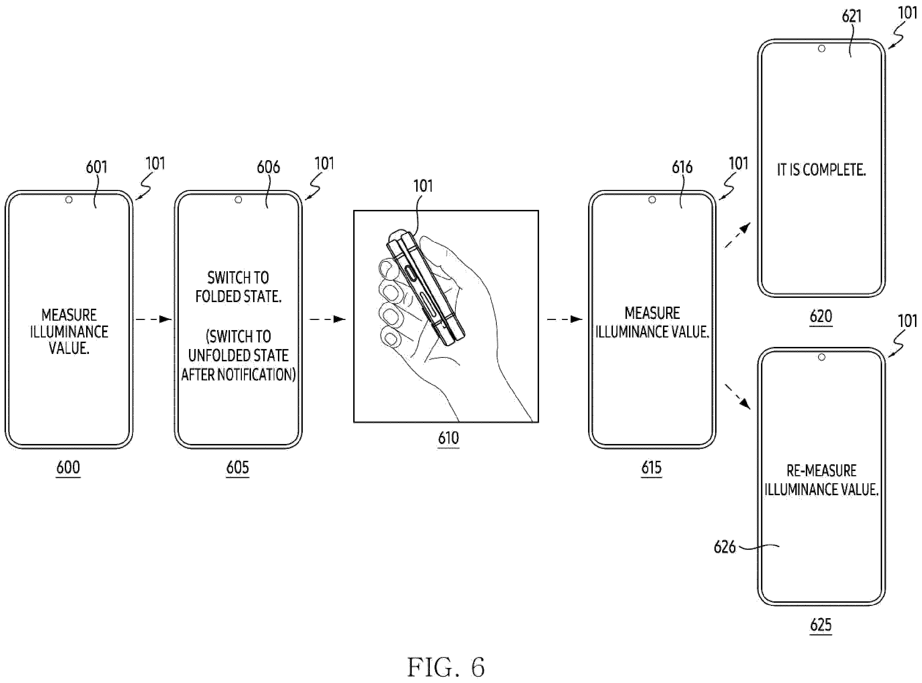

FIG. 6 illustrates an example of a user interface for obtaining an illuminance value by an electronic device according to an embodiment. An electronic device 101 of FIG. 6 may include the electronic device 101 of FIGS. 1 to 5. Referring to FIG. 6, an example of states 600, 605, 615, 620, and 625 corresponding to the state 300 (e.g., the unfolded state) of FIG. 3 and a state 610 corresponding to the state 305 (e.g., the folded state) of FIG. 3 are illustrated.

According to an embodiment, in state 600, the electronic device 101 may display a first user interface 601 indicating that obtaining a plurality of illumination values using an illumination sensor (e.g., the illumination sensor 231 of FIG. 2) on a flexible display (e.g., the flexible display 220 of FIG. 2). For example, the first user interface 601 may be an example of a user interface for obtaining connection information (e.g., the connection information 270 of FIG. 2). For example, while displaying the first user interface 601, the electronic device 101 may obtain a plurality of illumination values indicating the intensity of external light of the electronic device 101 based on a specified period by using the illumination sensor. The electronic device 101 may obtain a first illumination value (e.g., the first illumination value 411 of FIG. 4), which is an average value of the plurality of illumination values. For example, the electronic device 101 may temporarily refrain from displaying the first user interface 601 based on obtaining of the first illumination value. For example, in state 600, the electronic device 101 may perform operation 510 of FIG. 5.

According to an embodiment, in state 600, the electronic device 101 may temporarily refrain from displaying the first user interface 601 and display the second user interface 606 for guiding to change from the unfolded state (e.g., the state 300 in FIG. 3) to the folded state (e.g., the state 305). The electronic device 101 may identify an angle between a first housing (e.g., the first housing 310 of FIG. 3) and a second housing (e.g., the second housing 320 of FIG. 3) of the electronic device 101 by controlling a hall sensor (e.g., the hall sensor 232 of FIG. 2). The electronic device 101 may identify that the angle is included in a specified angle (e.g., 0 °) by an external force. The electronic device 101 may identify that a state of the electronic device 101 is changed from the unfolded state to the folded state by using the hall sensor. For example, in state 605, the electronic device 101 may perform operation 520 of FIG. 5.

According to an embodiment, in state 610, the electronic device 101 may temporarily refrain from displaying the second user interface 606 based on identifying that the unfolded state is changed to the folded state by using the hall sensor. In the folded state, the electronic device 101 may obtain a second illumination value (e.g., the second illumination value 412 of FIG. 4) indicating the intensity of the external light of the electronic device 101, by controlling the illumination sensor, which is at least partially shielded by another housing distinguished from a housing in which the illumination sensor is disposed. For example, in state 610, the electronic device 101 may perform operation 530 of FIG. 5. For example, the electronic device 101 may display a user interface indicating whether some of the light facing the illumination sensor is shielded by an external object (e.g., a user's hand) distinguished from another housing by using the illumination sensor. For example, the electronic device 101 may display the user interface on a cover display in the folded state. For example, the electronic device 101 may identify whether some of the light facing the illumination sensor is shielded by the external object, by using a proximity sensor (e.g., a sensor for identifying a contact between the electronic device 101 and the user) distinguished from the illumination sensor. For example, the electronic device 101 may identify whether some of the light facing the illumination sensor is shielded by the external object, based on identifying a touch input by using the cover display. However, it is not limited thereto.

For example, the electronic device 101 may provide a notification message for guiding obtaining the second illumination value to a user, based on obtaining the second illumination value. The notification message may be displayed on a cover display (e.g., the cover display 225 of FIG. 2) of the electronic device 101. The notification message may be outputted based on a form of an audio signal through a speaker (not shown) of the electronic device 101. For example, the electronic device 101 may notify obtaining of the second illumination value to the user, by using an actuator (not shown) that causes vibration.

According to an embodiment, in the state 615, the electronic device 101 may identify that a state of the electronic device 101 is changed from the folded state to the unfolded state by using the hall sensor. The electronic device 101 may display a third user interface 616 for identifying an illumination value in state 615 on the flexible display. For example, the electronic device 101 may obtain a plurality of illumination values based on a specified period in state 615 by using an illumination sensor. The electronic device 101 may obtain a third illumination value indicating an average of the plurality of illumination values. The electronic device 101 may identify whether the third illumination value substantially equal to the first illumination value is obtained, based on obtaining the third illumination value. For example, in the state 615, the electronic device 101 may perform operation 550 of FIG. 5.

According to an embodiment, the electronic device 101 may change a state of the electronic device 101 from the state 615 to the state 620, based on obtaining the third illumination value corresponding to the first illumination value. In the state 620, the electronic device 101 may display a fourth user interface 621 indicating obtaining of connection information on the flexible display. The electronic device 101 may identify that the state 600 to the state 620 is a state of the electronic device 101 included in the substantially same environment, based on obtaining the third illumination value corresponding to the first illumination value. For example, in the state 620, the electronic device 101 may perform operation 560 of FIG. 5.

According to an embodiment, the electronic device 101 may change a state of the electronic device 101 from the state 615 to the state 625, based on obtaining the third illumination value distinguished from the first illumination value. For example, in the state 625, the electronic device 101 may perform operation 570 of FIG. 5. For example, in the state 625, the electronic device 101 may display a fifth user interface 626 indicating that is temporarily refrain from obtaining connection information, on the flexible display. As an example, a fifth user interface 626 may include information indicating that performing an operation for obtaining connection information is initiated based on the third illumination value. After displaying the fifth user interface 626, the electronic device 101 may display the second user interface 606. The electronic device 101 may initiate performing an operation for obtaining connection information based on the third illumination value.

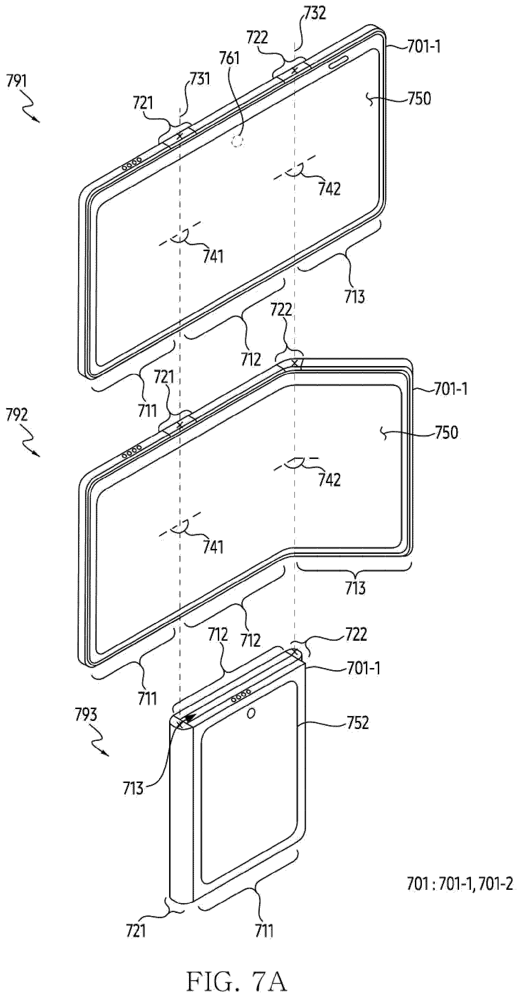

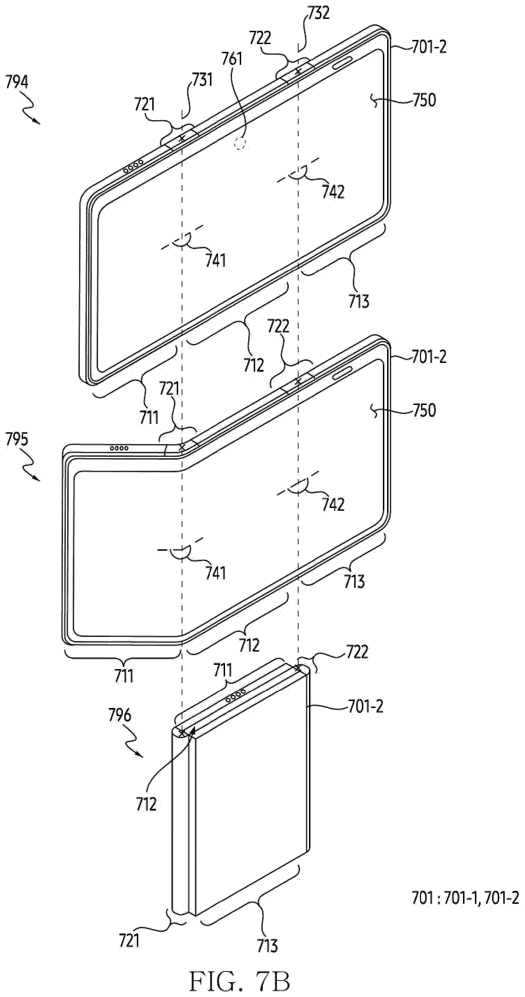

FIGS. 7A and 7B exemplarily illustrate a deformable electronic device. In an embodiment, in terms of being owned by a user, an electronic device 701 may be referred to as a terminal (or user terminal). For example, the terminal may include a personal computer (PC) such as a laptop and a desktop. For example, the terminal may include a smartphone, a smart pad, and/or a tablet PC. The terminal may include a smart accessory such as a smart watch and/or a head-mounted device (HMD). An electronic device 101 of FIGS. 7A and 7B may be included in the electronic device 101 of FIGS. 1 to 6. The folding housing 330 of FIG. 3 may be referred to as a hinge assembly in terms of including a hinge structure for rotating a plurality of housings. Hinge assemblies 721 and 722 may be referred to a folding housing 330.

Referring to FIGS. 7A to 7B, according to an embodiment, the electronic device 701 may include a deformable housing. Based on deformability, a housing of the electronic device 701 may be divided into a plurality of portions. For example, the housing of the electronic device 701 of FIGS. 7A to 7B may include a first housing 711, a second housing 712, and a first hinge assembly 721 for rotatably coupling the first housing 711 and the second housing 712. A relative position, angle, shape, and/or distance of the first housing 711 and the second housing 712, which are rigid bodies, may be changed by an external force, by the first hinge assembly 721. The housing of the electronic device 701 may include the second housing 712, a third housing 713, and a second hinge assembly 722 for rotatably coupling the second housing 712 and the third housing 713. A relative position, angle, shape, posture, and/or distance of the second housing 712 and the third housing 713, which are rigid bodies, may be changed by the external force, by the second hinge assembly 722.

Referring to FIGS. 7A to 7B, a first folding axis 731 may be a rotation axis of the first housing 711 and the second housing 712 connected through the first hinge assembly 721, and may be formed in the first hinge assembly 721. As the first housing 711 and/or the second housing 712 is rotated with respect to the first folding axis 731, a first angle 741 between the first housing 711, the first hinge assembly 721, and the second housing 712 may be changed. A second folding axis 732 is a rotation axis of the second housing 712 and the third housing 713 connected through the second hinge assembly 722, and may be formed in the second hinge assembly 722. As the second housing 712 and/or the third housing 713 is rotated with respect to the second folding axis 732, a second angle 742 between the second housing 712, the second hinge assembly 722, and the third housing 713 may be changed.

Referring to FIGS. 7A to 7B, according to an embodiment, the electronic device 701 may include a flexible display 750 (e.g., the flexible display 220 of FIG. 2) disposed on a surface (e.g., a front surface of the electronic device 701) of the first housing 711, the second housing 712, and the third housing 713. For example, the flexible display 750 may be disposed from the first housing 711 to the third housing 713 across the first hinge assembly 721, the second housing 712, and the second hinge assembly 722. Hereinafter, the first angle 741 may correspond to an angle between one surface of the first housing 711 and one surface of the second housing 712 in which the flexible display 750, which may be folded by the first folding axis 731 of the first hinge assembly 721, is disposed. Hereinafter, the second angle 742 may correspond to an angle between one surface of the second housing 712 and one surface of the third housing 713 in which the flexible display 750, which may be folded by the second folding axis 732 of the second hinge assembly 722, is disposed.

Referring to FIGS. 7A to 7B, according to an embodiment, the electronic device 701 may include an illumination sensor 761 (e.g., the illumination sensor 231 of FIG. 2) in at least one of the first housing 711, the second housing 712, and the third housing 713. The illumination sensor 761 may be disposed within a surface of at least one housing in which the flexible display 750 is disposed. Referring to FIGS. 7A to 7B, it is illustrated that the illumination sensor 761 is disposed within one surface of the housing, a position in which the illumination sensor is disposed is not limited thereto.

Referring to FIGS. 7A to 7B, different forms of the electronic device 701 supporting deformability based on a plurality of folding axes (e.g., the first folding axis 731 and/or the second folding axis 732) are illustrated. Referring to FIG. 7A, a first electronic device 701-1 including the flexible display 750 fully covered by the first housing 711 to the third housing 713, which are folded along the first and second folding axes 731 and 732, is illustrated. Referring to FIG. 7A, different states (e.g., a first state 791 to a third state 793) of the first electronic device 701-1 divided by the first angle 741 and the second angle 742 are illustrated. The first state 791 of the first electronic device 701-1 in which the first angle 741 and the second angle 742 are substantially at a straight angle (e.g., about 180 °) may be referred to as a fully unfolded state, an opened state, a flat state, and/or a planar state. In the first state 791, the flexible display 750 disposed from the first housing 711 to the third housing 713 may have a substantially flat shape. In the first state 791, a single plane may be formed on a front surface of the electronic device 701 on which the flexible display 750 is disposed.

Referring to FIG. 7A, the second state 792 of the first electronic device 701-1 in which the first angle 741 is substantially a straight angle and the second angle 742 is less than a straight angle is illustrated. The second state 792 of the first electronic device 701-1 in which the first angle 741 and/or the second angle 742 are less than a straight angle may be referred to as an in-folded state, a sub-folding state (or a sub-folded state), and/or a concave state. Although it is illustrated that only the second hinge assembly 722 of the first hinge assembly 721 and the second hinge assembly 722 is folded, the embodiment is not limited thereto, and the sub-folded state may include a state in which both the first angle 741 and the second angle 742 are less than the straight angle and exceed 0°. In the sub-folded state, a plurality of planes may be formed by the flexible display 750 folded by at least one hinge assembly. Referring to the second state 792, the flexible display 750 bent by the second hinge assembly 722 may include two flat portions divided by the second hinge assembly 722. For example, the flat portions of the flexible display 750 divided by the second hinge assembly 722 may face other directions that are not parallel.

Referring to FIG. 7A, the third state 793 of the first electronic device 701-1 in which all of the first angle 741 and the second angle 742 are substantially 0° may be referred to as a fully folded state, a folded state, and/or a closed state. In the third state 793, the flexible display 750 may be fully covered visually by the first housing 711 to the third housing 713. For example, in the folded state, a size in which the flexible display 750 of the first electronic device 701-1 is exposed to the outside may be substantially zero. In the folded state, a size in which the illumination sensor 761 of the first electronic device 701-1 is exposed to the outside may be substantially zero. In the folded state, at least a part of the illumination sensor 761 may be covered by a plurality of housings. Referring to FIG. 7A, an exemplary third state 793 in which each of a front surface and a rear surface of the third housing 713 in which a part of the flexible display 750 is disposed are covered by the first housing 711 and the second housing 712 is illustrated, but the embodiment is not limited thereto. The first electronic device 701-1 including the flexible display 750 fully covered in the folded state may include a cover display 752 (e.g., the cover display 225 of FIG. 2) disposed on the rear surface opposite to the front surface on which the flexible display 750 is disposed. Referring to FIG. 7A, according to an embodiment, the first electronic device 701-1 may include the cover display 752 disposed on a second surface of the first housing 711 opposite to a first surface of the first housing 711 in which a part of the flexible display 750 is disposed.

Referring to FIG. 7A, the first electronic device 701-1 including the flexible display 750 configured to be folded at an angle less than or equal to a straight angle along the first folding axis 731 and the second folding axis 732 may be referred to as a G-shaped foldable electronic device. Referring to FIG. 7B, different forms of a second electronic device 701-2 including the flexible display 750 configured to be folded at an angle exceeding a straight angle along at least one of the first folding axis 731 or the second folding axis 732 are illustrated. The second electronic device 701-2 may be referred to as an S-shaped (or Z-shaped) foldable electronic device.

Referring to FIG. 7B, different states (e.g., a fourth state 794 to a sixth state 796) of the second electronic device 701-2 divided by the first angle 741 and the second angle 742 are illustrated. The fourth state 794 of the second electronic device 701-2 may correspond to the first state 791 of the first electronic device 701-1 of FIG. 7A. In the fourth state 794 corresponding to the unfolded state, a flat plane may be formed by the flexible display 750.

Referring to FIG. 7B, the fifth state 795 of the second electronic device 701-2 in which the first angle 741 exceeds a straight angle and the second angle 742 is substantially a straight angle is illustrated. A state of the second electronic device 701-2 in which the first angle 741 and/or the second angle 742 exceed a straight angle and is less than 360 ° may be referred to as an out-folded state and/or a convex state. Although only the first angle 741 of the first angle 741 and the second angle 742 is illustrated to exceed a straight angle, the embodiment is not limited thereto. In the convex state including the fifth state 795, a plurality of planes formed by the flexible display 750 folded by the first hinge assembly 721 may face different directions.

Referring to FIG. 7B, the sixth state 796 of the second electronic device 701-2 in which the first angle 741 is substantially 360 ° and the second angle 742 is substantially 0° may be referred to as a fully folded state, a folded state and/or a closed state. In the sixth state 796, only a portion of the flexible display 750 disposed on the first housing 711 among portions of the flexible display 750 disposed in each of the first housing 711 to the third housing 713 may be exposed to the outside.

Referring to FIGS. 7A and 7B, according to an embodiment, the electronic device 701 may obtain an illumination value from each of states 791, 792, 793, 794, 795, and 796, by using the illumination sensor 761.

For example, referring to FIG. 7A, the first electronic device 701-1 may obtain a first illumination value using the illumination sensor 761, in the state 791. The first electronic device 701-1 may obtain a second illumination value using the illumination sensor 761, in a state in which one of the first angle 741 or the second angle 742 is substantially zero. The first electronic device 701-1 may obtain a third illumination value using the illumination sensor 761, in a state in which the first angle 741 and the second angle 742 are substantially zero (e.g., the state 793). The first electronic device 701-1 may identify that a state of the first electronic device is changed from the state (e.g., the state 793) to the state 791. The first electronic device 701-1 may identify a fourth illumination value corresponding to the first illumination value by using the illumination sensor 761, based on identifying changing to the state 791. The first electronic device 701-1 may obtain connection information indicating a relationship between the first illumination value, the second illumination value, and the third illumination value, based on identifying the fourth illumination value corresponding to the first illumination value. For example, the first electronic device 701-1 may obtain the first illumination value and/or the second illumination value, by using the connection information, based on identifying the third illumination value. The first electronic device 701-1 may estimate the intensity of the external light of the first electronic device 701-1, at the time when the third illumination value is identified, based on obtaining the first illumination value and/or the second illumination value.

For example, referring to FIG. 7B, the second electronic device 701-2 may obtain the first illumination value by using the illumination sensor 761, in the state 794. The second electronic device 701-2 may obtain the second illumination value by using the illumination sensor 761, in a state in which the first angle 741 is substantially 360° or the second angle 742 is substantially 0 °. The second electronic device 701-2 may obtain the third illumination value by using the illumination sensor, in a state in which the first angle 741 is substantially 360 ° and the second angle 742 is substantially zero (e.g., the state 796). The second electronic device 701-2 may identify that a state of the first electronic device is changed from the state (e.g., the state 796) to the state 794. The electronic device 701-2 may identify the fourth illumination value corresponding to the first illumination value by using the illumination sensor 761, based on identifying changing to the state 794. The second electronic device 701-2 may obtain connection information indicating a relationship between the first illumination value, the second illumination value, and the third illumination value, based on identifying the fourth illumination value corresponding to the first illumination value. For example, the second electronic device 701-2 may obtain the first illumination value and/or the second illumination value by using connection information, based on identifying the third illumination value. The second electronic device 701-2 may estimate the intensity of the external light of the second electronic device 701-2, at the time when the third illumination value is identified, based on obtaining the first illumination value and/or the second illumination value.

As described above, according to an embodiment, the electronic device 701 may obtain the intensity of the external light of the electronic device 701 by using an illumination value identified in a state that at least a portion of the illumination sensor 761 is covered, by using connection information. Rather than using the plurality of illumination sensors, the electronic device 701 may secure a space in the electronic device 701 capable of including another electronic component distinguished from the illumination sensor, by identifying an illumination value corresponding to each of the plurality of states 791, 792, 793, 794, 795, and 796 using one illumination sensor 761.

FIG. 8 illustrates an example of a flowchart illustrating an operation of an electronic device according to an embodiment. An electronic device 101 of FIG. 8 may include the electronic device 101 of FIG. 1 to the electronic device 701 of FIG. 7A. At least one of operations of FIG. 8 may be performed by the electronic device 101 of FIG. 2 or the processor 210 of FIG. 2. Each of the operations of FIG. 8 may be performed sequentially, but is not necessarily performed sequentially. For example, the sequence of each operation may be changed, and at least two operations may be performed in parallel.

Referring to FIG. 8, in operation 810, according to an embodiment, the processor may obtain a first illumination value corresponding to light received to the electronic device from the outside of the electronic device, by using an illumination sensor, in the unfolded state. The unfolded state may include a state in which a direction of a first housing (e.g., the first housing 310 of FIG. 3) of the electronic device matches a direction of a second housing (e.g., the second housing 320 of FIG. 3) of the electronic device. The unfolded state may include a state in which a direction in which a first surface 311 of the first housing (e.g., the first housing 310 of FIG. 3) of the electronic device faces matches a direction in which a third surface 321 of the second housing (e.g., the second housing 320 of FIG. 3) faces.

Referring to FIG. 8, in operation 820, according to an embodiment, the processor may obtain a second illumination value to be identified using an illumination sensor when the unfolded state is changed to the folded state, based on obtaining the first illumination value. For example, the processor may identify the second illumination value corresponding to the first illumination value, by using connection information (e.g., the connection information 270 of FIG. 2) set before obtaining the first illumination value. The folded state may include a state in which a direction of a first housing (e.g., the first housing 310 of FIG. 3) of the electronic device and a direction of a second housing (e.g., the second housing 320 of FIG. 3) of the electronic device are opposite to each other. The unfolded state may include a state in which a direction in which the first surface 311 of the first housing (e.g., the first housing 310 of FIG. 3) of the electronic device faces and a direction in which the third surface 321 of the second housing (e.g., the second housing 320 of FIG. 3) faces are opposite to each other.

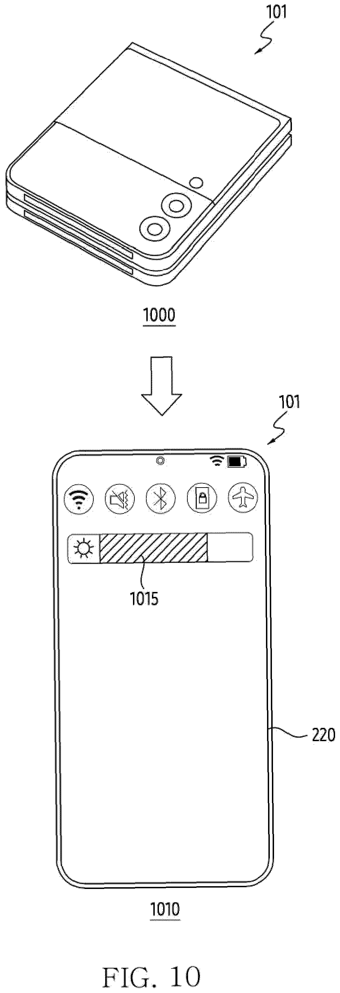

For example, the processor may obtain a third illumination value corresponding to the second illumination value by using the illumination sensor in the folded state (e.g., the state 305 in FIG. 3), before obtaining the first illumination value in the unfolded state (e.g., the state 300 in FIG. 3). For example, the processor may use a hall sensor (e.g., the hall sensor 232 of FIG. 2) to identify that the folded state is changed to the unfolded state. For example, the processor may obtain the first illumination value in the unfolded state. For example, after obtaining the first illumination value, the processor may identify that the unfolded state is changed to the folded state using the hall sensor. For example, in the folded state, data (e.g., the connection information 270 of FIG. 2) indicating a relationship between the first illumination value and the second illumination value may be obtained based on obtaining the second illumination value corresponding to the third illumination value. For example, the processor may obtain the second illumination value to be identified using the illumination sensor when the unfolded state is changed to the folded state, based on obtaining the first illumination value in the unfolded state by using the data. For example, when the second illumination value is obtained in the folded state, the processor may estimate the first illumination value to be identified in the unfolded state by using data. For example, based on estimating the first illumination value, the processor may control the flexible display based on brightness corresponding to the first illumination value, in response to identifying that the folded state is changed to the unfolded state using the hall sensor. An operation in which the processor controls the flexible display based on the brightness will be described later with reference to FIG. 10.

Hereinafter, according to an embodiment, an example of an operation in which the electronic device 101 temporarily refrains from executing a function corresponding to at least one input in a state of identifying an illumination value equal to or less than a threshold value will be described later with reference to FIG. 9.

FIG. 9 illustrates an example of a state in which an electronic device identifies an illuminance value equal to or less than a threshold value, according to an embodiment. An electronic device 101 of FIG. 9 may be referred to the electronic device 101 of FIGS. 1 to 8.

Referring to FIG. 9, in an example 900, according to an embodiment, the electronic device 101 may identify an input 915 through a cover display 225 in the folded state (e.g., the state 305 of FIG. 3). For example, the electronic device 101 may identify a second illumination value (e.g., the second illumination value 412 of FIG. 4) in the folded state using an illumination sensor. The electronic device 101 may identify a first illumination value (e.g., the first illumination value 411 of FIG. 4) corresponding to the second illumination value by using connection information (e.g., the connection information 270 of FIG. 2), based on identifying the second illumination value. The electronic device 101 may identify the intensity of the external light of the electronic device 101 based on identifying the first illumination value. The electronic device 101 may identify the first illumination value equal to or less than a threshold value. The input 915 may be an input for initiating a function for activating the cover display 225 of the electronic device 101. The input 915 may be an input not intended by the user 905. The electronic device 101 may identify the input 915 as an input not intended by the user 905, based on identifying the first illumination value equal to or less than the threshold value. Based on identifying the first illumination value equal to or less than the threshold value, the electronic device 101 may temporarily refrain from initiating a function corresponding to the input 915.

For example, the electronic device 101 may control the cover display 225 based on obtaining the first illumination value and/or the second illumination value. The electronic device 101 may adjust brightness of the cover display 225, based on identifying the second illumination value. The electronic device 101 may control (or adjust) the brightness of the cover display 225 based on the first illumination value and the second illumination value.

For example, the electronic device 101 may inactivate a touch function of the cover display 225, based on the first illumination value and/or the second illumination value obtained using the illumination sensor. The electronic device 101 may temporarily refrain from identifying the input 915 to at least a portion of the cover display 225 on which the touch function is inactivated.

As described above, according to an embodiment, the electronic device 101 may identify the external brightness of the electronic device 101 in a state in which at least a portion of one illumination sensor is covered (e.g., the state 305 of FIG. 3). The electronic device 101 may identify an illumination value equal to or less than a threshold value in the state. For example, the electronic device 101 may be located in a pocket of a user 905. The electronic device 101 may identify the illumination value equal to or less than the threshold value in a state of being located in the pocket. The electronic device 101 may receive at least one input (e.g., the input 915) based on identifying the illumination value equal to or less than the threshold value. The electronic device 101 may identify at least one input as an input not intended by the user 905, based on identifying the illumination value equal to or less than the threshold value. The electronic device 101 may temporarily refrain from initiating a function corresponding to the input 915, based on receiving of the input not intended by the user 905. The electronic device 101 may refrain from performing the function not intended by the user 905, based on identifying the illumination value equal to or less than the threshold value, in the folded state.

FIG. 10 illustrates an example of an operation in which an electronic device adjusts brightness of a display based on an illuminance value, according to an embodiment. An electronic device 101 of FIG. 10 may include the electronic device 101 of FIGS. 1 to 9. A state 1000 may be included in the state 305 of FIG. 3. A state 1010 may be included in the state 300 of FIG. 3.

Referring to FIG. 10, according to an embodiment, In the state 1000, the electronic device 101 may identify a second illumination value (e.g., the second illumination value 412 of FIG. 4) by controlling an illumination sensor (e.g., the illumination sensor 231 of FIG. 2). The second illumination value may mean the intensity of the external light identified by the electronic device 101, in a state that at least a portion of the illumination sensor is covered.

For example, the electronic device 101 may identify a first illumination value (e.g., the first illumination value of FIG. 4) corresponding to the second illumination value by using connection information (e.g., the connection information 270 of FIG. 2). The electronic device 101 may identify brightness of a flexible display 220 matching the first illumination value, based on identifying the first illumination value. The brightness of the flexible display 220 matching the first illumination value may be an example of brightness set so that a user of the electronic device 101 may identify a screen displayed on the flexible display 220 in an external environment including the external light corresponding to the first illumination value.

For example, the electronic device 101 may identify that the state 1000 is changed to the state 1010 through a hall sensor (e.g., the hall sensor 232 of FIG. 2). The electronic device 101 may identify that the state 1000 is changed to the state 1010 by an external force. The electronic device 101 may identify entering into the state 1010, based on identifying an angle between a first housing (e.g., the first housing 310 of FIG. 3) and a second housing (e.g., the second housing 320 of FIG. 3). The electronic device 101 may adjust the brightness of the flexible display 220 in response to identifying that the state 1000 is changed to the state 1010.

For example, in the state 1010, the electronic device 101 may control the flexible display 220 based on the brightness matching the first illumination value. For example, the electronic device 101 may display the brightness of the flexible display 220 to the user using a visual object 1015 on the flexible display 220.

According to an embodiment, the electronic device 101 may control the brightness of the flexible display 220, based on obtaining the first illumination value greater than or equal to the threshold for a specified time. For example, the electronic device 101 may adjust the brightness of the flexible display 220 relatively lower than brightness matching the first illumination value based on obtaining the first illumination value greater than or equal to the threshold for the specified time. The electronic device 101 may control the flexible display 220 based on brightness relatively lower than the brightness matching to the first illumination value, in order to reduce heat generated by controlling the flexible display 220 based on the brightness matching the first illumination value greater than or equal to the threshold for the specified time. However, it is not limited thereto.

As described above, according to an embodiment, the electronic device 101 may adjust the brightness of the flexible display 220 using the second illumination value identified in the folded state (e.g., the state 1000). The electronic device 101 may obtain the first illumination value matching the second illumination value by using connection information (e.g., the connection information 270 of FIG. 2) based on identifying the second illumination value. The electronic device 101 may identify the brightness of the flexible display matching the first illumination value based on obtaining the first illumination value. The electronic device 101 may adjust the brightness of the flexible display, in response to switching from the state 1000 to the state 1010 based on identifying the brightness of the flexible display.

For example, in case that the electronic device 101 does not use the connection information, the electronic device 101 may identify the intensity of the external light of the electronic device 101 by using the illumination sensor after identifying that the state 1000 is changed to the state 1010. The electronic device 101 may obtain an illumination value corresponding to the intensity of the external light identified after changing to the state 1010. The electronic device 101 may adjust the brightness of the flexible display 220 after obtaining the illumination value. By using the connection information, the electronic device 101 may adjust the brightness of the flexible display 220 faster than when not using the connection information.

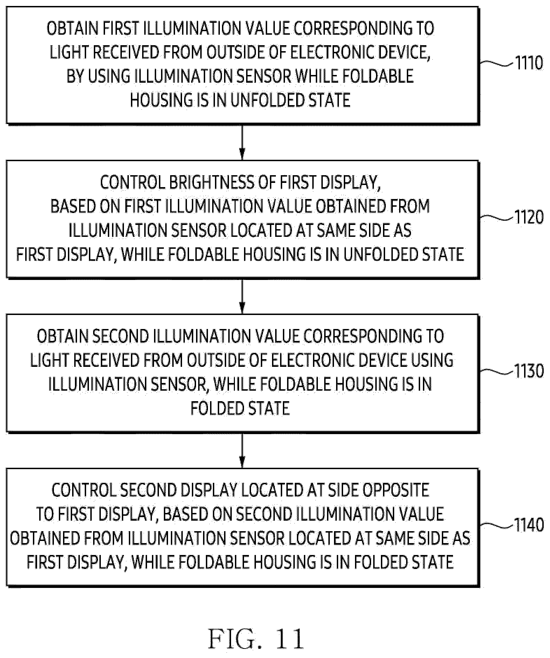

FIG. 11 illustrates an example of an exemplary flowchart illustrating an operation of an electronic device according to an embodiment. An electronic device of FIG. 11 may include the electronic device 101 of FIG. 1 to the electronic device 101 of FIG. 10. At least one of operations of FIG. 11 may be performed by the electronic device 101 of FIG. 2 or the processor 210 of FIG. 2. Each of the operations of FIG. 11 may be performed sequentially, but is not necessarily performed sequentially. For example, the sequence of each operation may be changed, and at least two operations may be performed in parallel.

Referring to FIG. 11, in operation 1110, according to an embodiment, the processor may obtain a first illumination value corresponding to the light received from the outside of the electronic device, by using an illumination sensor while a foldable housing is in the unfolded state. The foldable housing may include a first housing (e.g., the first housing 310 of FIG. 3) and a second housing (e.g., the second housing 320 of FIG. 3). The foldable housing may include a hinge (or hinge structure) that is rotatably connected between the first housing and the second housing and movable to a folded state, a partially folded state (or sub-folded state) and an unfolded state. The illumination sensor may be disposed in at least a portion of one surface on which the flexible display is disposed.

Referring to FIG. 11, in operation 1120, according to an embodiment, the processor may control brightness of a first display, based on a first illumination value obtained from an illumination sensor located at a same side as the first display while the foldable housing is in the unfolded state. For example, the first illumination value may correspond to an ambient light value. The first display may be referred to the flexible display 220 of FIG. 2.

Referring to FIG. 11, in operation 1130, according to an embodiment, the processor may obtain a second illumination value corresponding to the light received from the outside of the electronic device using the illumination sensor, while the foldable housing is in the folded state.

Referring to FIG. 11, in operation 1140, according to an embodiment, the processor may control a second display located at a side opposite to the first display, based on a second illumination value obtained from the illumination sensor located at the same side as the first display, while the foldable housing is in the folded state. The second display may be referred to the cover display 225 of FIG. 2.

For example, while the electronic device (or a housing of the electronic device) is in the folded state, the processor may control the brightness of the second display based on the first illumination value and the second illumination value obtained from the illumination sensor.

For example, the processor may turn off the second display based on the second illumination value obtained from the illumination sensor while the electronic device (or the housing of the electronic device) is in the folded state. The processor may turn on the second display when the electronic device obtains a third illumination value corresponding to the ambient light relatively brighter than the second illumination value from the illumination sensor, while the electronic device is in the folded state.

For example, the processor may inactivate a touch function of the second display based on the second illumination value obtained from the illumination sensor located at the same side as the first display, while the electronic device is in the folded state.

For example, while the electronic device is in the folded state, the processor may estimate an ambient light value based on the first illumination value and the second illumination value obtained from the illumination sensor located at the same side as the first display. The processor may control brightness of the cover display based on the estimated ambient light.

For example, the processor may identify a change from the folded state to the unfolded state after obtaining the second illumination value using the illumination sensor. The processor may obtain a third illumination value corresponding to the first illumination value using the illumination sensor, while the foldable housing is in the unfolded state. The third illumination value corresponding to the first illumination value may mean a value substantially the same as the first illumination value. The processor may identify that an external environment corresponding to the first illumination value and an external environment corresponding to the third illumination value are the same, based on obtaining the third illumination value corresponding to the first illumination value. The processor may obtain data indicating a relationship between the first illumination value and the second illumination value, based on obtaining the third illumination value corresponding to the first illumination value. The data may be referred to as connection information. For example, while the electronic device is in the folded state, the processor may identify the first illumination value based on the data and the second illumination value obtained from the illumination sensor located at the same side as the first display. The processor may estimate an ambient light value based on the first illumination value. The processor may control brightness of the first display based on the ambient light value, in response to a state of the electronic device moving from the folded state to the unfolded state.

According to an embodiment, in the unfolded state, when obtaining of the second illumination value less than the threshold value is maintained for a specified time, the processor may enter a specified mode. The specified mode (e.g., a sleep mode) may include a mode for at least temporarily inactivating at least one function among functions of the electronic device. For example, the processor entering the specified mode may at least temporarily refrain from outputting an audio signal to notify the user of notification.

According to an embodiment, in the unfolded state, the processor may display a preview image obtained using a camera (not shown) on a second display (e.g., the cover display 225 of FIG. 2). The processor may display the preview image on the second display, based on the execution of a software application related to the camera. The processor may obtain a second illumination value corresponding to the ambient light received from the outside of the electronic device using an illumination sensor located at the same side as the first display, while displaying the preview image on the second display. For example, the processor may identify the intensity of the ambient light corresponding to the first illumination value, based on data (e.g., the connection information 270 of FIG. 2), based on obtaining of the second illumination value.

For example, the processor may obtain at least a portion of the preview image from the camera, based on a specified mode (e.g., night mode) using the second illumination value. The processor may obtain a plurality of images indicating the preview image for a specified time, in response to an input for obtaining the preview image displayed on the second display. In the specified mode, the processor may obtain another image having a relatively brighter brightness value than an image obtained based on the ambient light corresponding to the second illumination value, based on obtaining the plurality of images. For example, the processor may obtain the other image based on synthesizing the plurality of images. As an example, the processor may use an infrared sensor (or infrared light emitting diode (IR LED)) to obtain the preview image from the camera based on a specified mode.

According to an embodiment, the electronic device may identify illuminance of a surrounding environment of the electronic device by using one illumination sensor, independently of a state of the electronic device. The electronic device may initiate or temporarily refrain from performing an operation according to the surrounding environment based on identifying the illuminance. A method for an electronic device to identify illuminance independently of a state of the electronic device may be required.

As described above, according to an embodiment, an electronic device 101 may comprise a first housing 310, a second housing 320, a flexible display 220 disposed in the first housing and the second housing, an illumination sensor 231 disposed in at least one of the first housing or the second housing, memory 215 including one or more storage mediums for storing instructions, and at least one processor 210. The instructions, when executed by the at least one processor individually or collectively, may cause the electronic device to obtain a first illumination value 411 corresponding to light received from outside of the electronic device to the electronic device, using the illumination sensor, in a first state 300 in which a direction of the first housing and a direction of the second housing are the same. The instructions, when executed by the at least one processor individually or collectively, may cause the electronic device to obtain a second illumination value 412 to be identified using the illumination sensor when the first state is changed to a second state 305 in which the direction of the first housing and the direction of the second housing are opposite, based on obtaining the first illumination value.

For example, the electronic device may include a hall sensor 232 for identifying an angle between the first housing and the second housing. The instructions, when executed by the at least one processor individually or collectively, may cause the electronic device to, before obtaining the first illumination value in the first state, obtain a third illumination value corresponding to the second illumination value using the illumination sensor in the second state. The instructions, when executed by the at least one processor individually or collectively, may cause the electronic device to obtain the first illumination value based on identifying that the second state is changed to the first state using the hall sensor. The instructions, when executed by the at least one processor individually or collectively, may cause the electronic device to identify that the first state is changed to the second state using the hall sensor. The instructions, when executed by the at least one processor individually or collectively, may cause the electronic device to obtain data 270 indicating a relationship between the first illumination value and the second illumination value, based on obtaining the second illumination value corresponding to the third illumination value in the second state. The instructions, when executed by the at least one processor individually or collectively, may cause the electronic device to obtain the second illumination value to be identified using the illumination sensor when the first state is changed to the second state, based on obtaining the first illumination value in the first state using the data.

For example, in order to obtain the first illumination value, the instructions, when executed by the at least one processor individually or collectively, may cause the electronic device to identify a plurality of illumination values using the illumination sensor based on a specified period. The instructions, when executed by the at least one processor individually or collectively, may cause the electronic device to obtain the first illumination value indicating an average value among the plurality of illumination values.

For example, the instructions, when executed by the at least one processor individually or collectively, may cause the electronic device to estimate the first illumination value using the data, when identifying the second illumination value using the illumination sensor in the second state. The instructions, when executed by the at least one processor individually or collectively, may cause the electronic device to control the flexible display based on brightness corresponding to the first illumination value, in response to identifying that the second state is changed to the first state using the hall sensor, based on estimating the first illumination value.

For example, the instructions, when executed by the at least one processor individually or collectively, may cause the electronic device to display a first user interface 601 indicating that a plurality of illumination values are obtained using the illumination sensor, on the flexible display, in order to obtain the first illumination value. The instructions, when executed by the at least one processor individually or collectively, may cause the electronic device to temporarily refrain from displaying the first user interface and display a second user interface 606 for guiding to change from the first state to the second state, based on obtaining the first illumination value.

For example, in order to obtain the second illumination value, the instructions, when executed by the at least one processor individually or collectively, may cause the electronic device to obtain the second illumination value in the second state while temporarily refraining from displaying the second user interface, based on identifying that the first state is changed to the second state using the hall sensor.

For example, in the second state, the illumination sensor may be shielded by another housing distinct from at least one housing in which the illumination sensor is disposed. The instructions, when executed by the at least one processor individually or collectively, may cause the electronic device to identify the first illumination value, when obtaining the second illumination value using the illumination sensor in the second state in which the illumination sensor is shielded.

As described above, according to an embodiment, an electronic device 101 may comprise a first housing 310, a second housing 320, a folding housing 330 capable of changing to an unfolded state 300 in which a direction in which the first surface of the first housing faces is the same as a direction in which the third surface of the second housing faces and a folded state 305 in which the direction in which the first side faces is opposite to the direction in which the third side faces by rotatably connecting the first housing and the second housing, a flexible display 220 disposed in the first housing and the second housing, an illumination sensor 231 disposed in at least one of the first housing or the second housing, a hall sensor 232 for identifying an angle between the first housing and the second housing, memory 215 including one or more storage mediums for storing instructions, and at least one processor 210. The instructions, when executed by the at least one processor individually or collectively, may cause the electronic device to obtain a first illumination value 411 based on the light received to the electronic device using the illumination sensor in the unfolded state. The instructions, when executed by the at least one processor individually or collectively, may cause the electronic device to identify that the unfolded state is changed to the folded state using the hall sensor. The instructions, when executed by the at least one processor individually or collectively, may cause the electronic device to identify a second illumination value 412 using the illumination sensor in the folded state. The instructions, when executed by the at least one processor individually or collectively, may cause the electronic device to identify that the folded state is changed to the unfolded state using the hall sensor. The instructions, when executed by the at least one processor individually or collectively, may cause the electronic device to identify whether obtaining a third illumination value corresponding to the first illumination value using the illumination sensor in the unfolding state. The instructions, when executed by the at least one processor individually or collectively, may cause the electronic device to obtain connection information 270 indicating a relationship between the first illumination value and the second illumination value, in a first state in which the third illumination value corresponding to the first illumination value is obtained.

For example, the instructions, when executed by the at least one processor individually or collectively, may cause the electronic device to temporarily refrain from obtaining the connection information indicating the relationship between the first illumination value and the second illumination value, in a second state distinct from the first state in which the third illumination value corresponding to the first illumination value is obtained.

For example, the instructions, when executed by the at least one processor individually or collectively, may cause the electronic device to obtain the third illumination value indicating an average value from among a plurality of illumination values identified using the illumination sensor in the unfolded state based on a specified period, based on identifying that the folded state is changed to the unfolded state using the hall sensor.

For example, the instructions, when executed by the at least one processor individually or collectively, may cause the electronic device to, while in the folded state, estimate the first illumination value using the connection information when identifying the second illumination value using the illumination sensor. The instructions, when executed by the at least one processor individually or collectively, may cause the electronic device to control the brightness of the first display based on the first illumination value, in response to identifying that the foldable housing is moved from the folded state to the unfolded state using the hall sensor, based on estimating the first illumination value.

For example, the instructions, when executed by the at least one processor individually or collectively, may cause the electronic device, in order to obtain the first illumination value, display a first user interface 601 on the flexible display indicating that a plurality of illumination values are obtained using the illumination sensor. The instructions, when executed by the at least one processor individually or collectively, may cause the electronic device to, based on obtaining the first illumination value, temporarily refrain from displaying the first user interface and display a second user interface 606 for guiding to change from the unfolded state to the folded state.

For example, the instructions, when executed by the at least one processor individually or collectively, may cause the electronic device to, in order to obtain the second illumination value, obtain the second illumination value in the folded state while temporarily refraining from displaying the second user interface, based on identifying that the unfolded state is changed to the folded state using the hall sensor.

For example, the instructions, when executed by the at least one processor individually or collectively, may cause the electronic device to, in order to obtain the connection information, display a third user interface 616 indicating obtaining of the connection information based on obtaining the third illumination value corresponding to the first illumination value, on the flexible display.

For example, the instructions, when executed by the at least one processor individually or collectively, may cause the electronic device to obtain other connection information distinct from the connection information, in a second state distinct from the first state, based on the third illumination value.

As described above, according to an embodiment, a computer readable storage medium storing one or more programs, the one or more programs may comprise instructions which, when executed by a processor 210 of an electronic device 101, cause the electronic device to obtain a first illumination value 411 corresponding to light received from outside of the electronic device to the electronic device, using an illumination sensor 231 in a first state 300 in which a direction of the a housing 310 and a direction of a second housing 320 are the same. The one or more programs may comprise instructions which, when executed by the processor of the electronic device, cause the electronic device to obtain a second illumination value 412 to be identified using the illumination sensor when the first state is changed to a second state 305 in which the direction of the first housing and the direction of the second housing are opposite, based on obtaining the first illumination value.

For example, the one or more programs may comprise instructions which, when executed by the processor of the electronic device, cause the electronic device to obtain a third illumination value corresponding to the second illumination value using the illumination sensor in the second state before obtaining the first illumination value in the first state. The one or more programs may comprise instructions which, when executed by the processor of the electronic device, cause the electronic device to identify that the second state is changed to the first state using a hall sensor 232 for identifying an angle between the first housing and the second housing of the electronic device. The one or more programs may comprise instructions which, when executed by the processor of the electronic device, cause the electronic device to obtain the first illumination value in the first state. The one or more programs may comprise instructions which, when executed by the processor of the electronic device, cause the electronic device to identify that the first state is changed to the second state using the hall sensor. The one or more programs may comprise instructions which, when executed by the processor of the electronic device, cause the electronic device to obtain data 270 indicating a relationship between the first illumination value and the second illumination value in the second state, based on obtaining the second illumination value corresponding to the third illumination value. The one or more programs may comprise instructions which, when executed by the processor of the electronic device, cause the electronic device to obtain the second illumination value to be identified using the illumination sensor when the first state is changed to the second state, based on obtaining the first illumination value in the first state using the data.

For example, in order to obtain the first illumination value, the one or more programs may comprise instructions which, when executed by the processor of the electronic device, cause the electronic device to identify a plurality of illumination values using the illumination sensor based on a specified period. The one or more programs may comprise instructions which, when executed by the processor of the electronic device, cause the electronic device to obtain the first illumination value indicating an average value among the plurality of illumination values.

For example, the one or more programs may comprise instructions which, when executed by the processor of the electronic device, cause the electronic device to estimate the first illumination value using the data, when identifying the second illumination value using the illumination sensor in the second state. The one or more programs may comprise instructions which, when executed by the processor of the electronic device, cause the electronic device to control the flexible display 220 based on brightness corresponding to the first illumination value in response to identifying that the second state is changed to the first state using the hall sensor based on estimating the first illumination value.

For example, in order to obtain the first illumination value, the one or more programs may comprise instructions which, when executed by the processor of the electronic device, cause the electronic device to display a first user interface 601 indicating that a plurality of illumination values are obtained using the illumination sensor, on the flexible display. The one or more programs may comprise instructions which, when executed by the processor of the electronic device, cause the electronic device to temporarily refrain from displaying the first user interface and display a second user interface 606 for guiding to change from the first state to the second state, based on obtaining the first illumination value.

As described above, according to an embodiment, a computer readable storage medium storing one or more programs, the one or more programs may comprise instructions which, when executed by a processor 210 of an electronic device 101, cause the electronic device to obtain a first illumination value 411 based on light received to the electronic device using an illumination sensor 231 in an unfolded state 300. The one or more programs may comprise instructions which, when executed by the processor of the electronic device, cause the electronic device to identify that the unfolded state is changed to a folded state 305 using a hall sensor 232. The one or more programs may comprise instructions which, when executed by the processor of the electronic device, cause the electronic device to identify a second illumination value 412 using the illumination sensor in the folded state. The one or more programs may comprise instructions which, when executed by the processor of the electronic device, cause the electronic device to identify that the folded state is changed to the unfolded state using the hall sensor. The one or more programs may comprise instructions which, when executed by the processor of the electronic device, cause the electronic device to identify whether obtaining a third illumination value corresponding to the first illumination value using the illumination sensor, in the unfolded state. The one or more programs may comprise instructions which, when executed by the processor of the electronic device, cause the electronic device to obtain connection information 270 indicating a relationship between the first illumination value and the second illumination value in a first state in which the third illumination value corresponding to the first illumination value is obtained.

As described above, according to an embodiment, a method performed by an electronic device may comprise obtaining a first illumination value 411 corresponding to light received from outside of the electronic device to the electronic device, using an illumination sensor 231 in a first state 300 in which a direction of a first housing 310 and a direction of a second housing 320 are the same. The method may comprise obtaining a second illumination value 412 to be identified using an illumination sensor based on obtaining the first illumination value when the first state is changed to a second state 305 in which the direction of the first housing and the direction of the second housing are opposite.

As described above, according to an embodiment, a method performed by an electronic device 101 may comprise obtaining a first illumination value 411 based on light received to the electronic device using an illumination sensor 231 in an unfolded state 300. The method may include identifying that the unfolded state is changed to a folded state 305 using a hall sensor 232. The method may include identifying a second illumination value 412 using the illumination sensor in the folded state. The method may include identifying that the folded state is changed to the unfolded state using the hall sensor. The method may include identifying whether obtaining a third illumination value corresponding to the first illumination value using the illumination sensor in the unfolded state. The method may include obtaining connection information 270 indicating a relationship between the first illumination value and the second illumination value, in a first state in which a third illumination value corresponding to the first illumination value is obtained.

As described above, according to an embodiment, an electronic device 101 may comprise a foldable housing including a first housing 310, a second housing 320 and a hinge rotatably connected between the first housing and the second housing such that the foldable housing is movable between a folded state 305, a partially folded state and an unfolded state 300, a first display 220 disposed on the first housing and the second housing and configured to bend as the foldable housing is moved between the folded state and the unfolded state, a second display 225 disposed on at least one of the first housing and the second housing at a side opposite to the first display, an illumination sensor 231 disposed on one of the first housing and the second housing at a same side as the first display, a processor 210, and memory 215 storing instructions. The instructions executed by the processor may cause the electronic device to obtain a first illumination value corresponding to light received from outside of the electronic device using the illumination sensor while the foldable housing is in the unfolded state. The instructions executed by the processor may cause the electronic device to, while the foldable housing is in the unfolded state, control brightness of the first display based on the first illumination value obtained from the illumination sensor located at the same side as the first display. The instructions executed by the processor may cause the electronic device to obtain a second illumination value corresponding to light received from outside of the electronic device using the illumination sensor while the foldable housing is in the folded state. The instructions executed by the processor may cause the electronic device to, while the foldable housing is in the folded state, control brightness of the second display based on the second illumination value obtained from the illumination sensor located at the same side as the first display.

For example, the instructions executed by the processor may cause the electronic device to, while the foldable housing is in the folded state, control the brightness of the second display based on the first illumination value and the second illumination value obtained from the illumination sensor located at the same side as the first display.

For example, the instructions executed by the processor may cause the electronic device to, while the foldable housing is in the folded state, control the second display to turn off the second display based on the second illumination value obtained from the illumination sensor located at the same side as the first display.

For example, the instructions executed by the processor may cause the electronic device to, while the foldable housing is in the folded state, estimate an ambient light value based on the first illumination value and the second illumination value obtained from the illumination sensor located at the same side as the first display. The instructions executed by the processor may cause the electronic device to control the brightness of the second display based on the estimated ambient light value.

For example, the instructions executed by the processor may cause the electronic device to, while the foldable housing is in the folded state, control the second display to inactivate a touch function of the second display based on the second illumination value obtained from the illumination sensor located at the same side as the first display.

For example, the instructions executed by the processor may cause the electronic device to identify a change from the folded state to unfolded state, after obtaining the second illumination value using the illumination sensor. The instructions executed by the processor may cause the electronic device to, while the foldable housing is in the unfolded state, obtain a third illumination value corresponding to the first illumination value using the illumination sensor. The instructions executed by the processor may cause the electronic device to obtain data 270 indicating a relationship between the first illumination value and the second illumination based on obtaining the third illumination value corresponding to the first illumination value.

For example, the instructions executed by the processor may cause the electronic device to, while the foldable housing is in the folded state, identify the first illumination value based on the data and the second illumination value obtained from the illumination sensor located at the same side as the first display. The instructions executed by the processor may cause the electronic device to estimate an ambient light value based on the first illumination value.

For example, the instructions executed by the processor may cause the electronic device to control the brightness of the first display based on the ambient light value, in response to a change from the folded state to the unfolded state.

As described above, according to an embodiment, a method of an electronic device 101 may comprise obtaining a first illumination value corresponding to light received from outside of the electronic device using an illumination sensor 231 while a foldable housing is in an unfolded state 305. The method may comprise, while the foldable housing is in the unfolded state, controlling brightness of a first display 220 based on the first illumination value obtained from the illumination sensor located at the same side as the first display. The method may comprise obtaining a second illumination value corresponding to light received from outside of the electronic device using the illumination sensor while the foldable housing is in a folded state 300. The method may comprise, while the foldable housing is in the folded state, controlling brightness of a second display 225 located at a side opposite to the first display based on the second illumination value obtained from the illumination sensor located at the same side as the first display.

For example, the controlling the brightness of the second display may comprise, while the foldable housing is in the folded state, controlling the brightness of the second display based on the first illumination value and the second illumination value obtained from the illumination sensor located at the same side as the first display.

For example, the controlling the brightness of the second display may comprise, while the foldable housing is in the folded state, controlling to turn off the second display based on the second illumination value obtained from the illumination sensor located at the same side as the first display.

For example, the controlling the brightness of the second display may comprise, while the foldable housing is in the folded state, estimating an ambient light value based on the first illumination value and the second illumination value obtained from the illumination sensor located at the same side as the first display. The controlling the brightness of the second display may comprise controlling the brightness of the second display based on the estimated ambient light value.

For example, the controlling the brightness of the second display may comprise, while the foldable housing is in the folded state, controlling to inactivate a touch function of the second display based on the second illumination value obtained from the illumination sensor located at the same side as the first display.

For example, the method may comprise identifying a change from the folded state to unfolded state, after obtaining the second illumination value using the illumination sensor. The method may comprise, while the foldable housing is in the unfolded state, obtaining a third illumination value corresponding to the first illumination value using the illumination sensor. The method may comprise obtaining data 270 indicating a relationship between the first illumination value and the second illumination value based on obtaining the third illumination value corresponding to the first illumination value.

For example, the method may comprise, while the foldable housing is in the folded state, identifying the first illumination value based on the data and the second illumination value obtained from the illumination sensor located at the same side as the first display. The method may comprise estimating an ambient light value based on the first illumination value.

As described above, according to an embodiment, an electronic device 101 may comprise a foldable housing including a first housing 310, a second housing 320 and a hinge rotatably connected between the first housing and the second housing such that the foldable housing is movable between a folded state, a partially folded state and an unfolded state, a first display 220 disposed on the first housing and the second housing and configured to bend as the foldable housing is moved between the folded state and the unfolded state, a second display 225 disposed on at least one of the first housing and the second housing at a side opposite to the first display, an illumination sensor 231 disposed on one of the first housing and the second housing at a same side as the first display, a hall sensor 232 for identifying an angle between the first housing and the second housing, a processor 210, and memory 215 storing instructions. The instructions executed by the processor cause the electronic device to obtain a first illumination value corresponding to light received from outside of the electronic device using the illumination sensor while the foldable housing is in the unfolded state. The instructions executed by the processor cause the electronic device to identify that the foldable housing is moved from the unfolded state to the folded state using the hall sensor. The instructions executed by the processor cause the electronic device to obtain a second illumination value corresponding to light received from outside of the electronic device using the illumination sensor while the foldable housing is in the folded state. The instructions executed by the processor cause the electronic device to identify that the foldable housing is moved from the folded state to the unfolded state using the hall sensor. The instructions executed by the processor cause the electronic device to identify whether a third illuminance value corresponding to the first illuminance value is obtained using the illuminance sensor while the foldable housing is in the folded state. The instructions executed by the processor cause the electronic device to obtain connection information 270 indicating a relationship between the first illuminance value and the second illuminance value in a first state in which the third illuminance value corresponding to the first illuminance value is obtained.

The apparatus described above may be implemented as a combination of hardware components, software components, and/or hardware components and software components. For example, the devices and components described in the embodiments may be implemented using one or more general purpose computers or special purpose computers such as processors, controllers, arithmetical logic unit (ALU), digital signal processor, microcomputers, field programmable gate array (FPGA), PLU (programmable logic unit), microprocessor, any other device capable of executing and responding to instructions. The processing device may perform an operating system OS and one or more software applications performed on the operating system. In addition, the processing device may access, store, manipulate, process, and generate data in response to execution of the software. For convenience of understanding, although one processing device may be described as being used, a person skilled in the art may see that the processing device may include a plurality of processing elements and/or a plurality of types of processing elements. For example, the processing device may include a plurality of processors or one processor and one controller. In addition, other processing configurations, such as a parallel processor, are also possible.

The software may include a computer program, code, instruction, or a combination of one or more of them and configure the processing device to operate as desired or command the processing device independently or in combination. Software and/or data may be embodied in any type of machine, component, physical device, computer storage medium, or device to be interpreted by a processing device or to provide instructions or data to the processing device. The software may be distributed on a networked computer system and stored or executed in a distributed manner. Software and data may be stored in one or more computer-readable recording media.

The method according to the embodiment may be implemented in the form of program instructions that may be performed through various computer means and recorded in a computer-readable medium. In this case, the medium may continuously store a computer-executable program or temporarily store the program for execution or download. In addition, the medium may be a variety of recording means or storage means in which a single or several hardware are combined and is not limited to media directly connected to any computer system and may be distributed on the network. Examples of media may include magnetic media such as hard disks, floppy disks and magnetic tapes, optical recording media such as CD-ROMs and DVDs, magnetooptical media such as floptical disks, ROMs, RAMs, flash memories, and the like to store program instructions. Examples of other media include app stores that distribute applications, sites that supply or distribute various software, and recording media or storage media managed by servers.

Although embodiments have been described according to limited embodiments and drawings as above, various modifications and modifications are possible from the above description to those of ordinary skill in the art. For example, even if the described techniques are performed in a different order from the described method, and/or components such as the described system, structure, device, circuit, etc. are combined or combined in a different form from the described method or are substituted or substituted by other components or equivalents, appropriate results may be achieved.

Therefore, other implementations, other embodiments, and equivalents to the claims fall within the scope of the claims to be described later.

## Claims

1. An electronic device (101), comprising:
a foldable housing including a first housing (310), a second housing (320) and a hinge rotatably connected between the first housing and the second housing such that the foldable housing is movable between a folded state (305), a partially folded state and an unfolded state (300);
a first display (220) disposed on the first housing and the second housing and configured to bend as the foldable housing is moved between the folded state and the unfolded state;
a second display (225) disposed on at least one of the first housing and the second housing at a side opposite to the first display;
an illumination sensor (231) disposed on one of the first housing and the second housing at a same side as the first display;
at least one processor (210); and
memory (215) including one or more storage mediums storing instructions, wherein the instructions, when executed by the at least one processor individually or collectively, cause the electronic device to:
obtain a first illumination value corresponding to light received from outside of the electronic device using the illumination sensor while the foldable housing is in the unfolded state,
while the foldable housing is in the unfolded state, control brightness of the first display based on the first illumination value obtained from the illumination sensor located at the same side as the first display,
obtain a second illumination value corresponding to light received from outside of the electronic device using the illumination sensor while the foldable housing is in the folded state, and
while the foldable housing is in the folded state, control brightness of the second display based on the second illumination value obtained from the illumination sensor located at the same side as the first display.

2. The electronic device of claim 1, wherein the instructions, when executed by the at least one processor individually or collectively, cause the electronic device to:
while the foldable housing is in the folded state, control the brightness of the second display based on the first illumination value and the second illumination value obtained from the illumination sensor located at the same side as the first display.

3. The electronic device of any one of claims 1 and 2, wherein the instructions, when executed by the at least one processor individually or collectively, cause the electronic device to:
while the foldable housing is in the folded state, control the second display to turn off the second display based on the second illumination value obtained from the illumination sensor located at the same side as the first display.

4. The electronic device of any one of claims 1 to 3, wherein the instructions, when executed by the at least one processor individually or collectively, cause the electronic device to:
while the foldable housing is in the folded state, estimate an ambient light value based on the first illumination value and the second illumination value obtained from the illumination sensor located at the same side as the first display, and
control the brightness of the second display based on the estimated ambient light value.

5. The electronic device of any one of claims 1 to 4, wherein the instructions, when executed by the at least one processor individually or collectively, cause the electronic device to:
while the foldable housing is in the folded state, control the second display to inactivate a touch function of the second display based on the second illumination value obtained from the illumination sensor located at the same side as the first display.

6. The electronic device of any one of claims 1 to 5, wherein the instructions, when executed by the at least one processor individually or collectively, cause the electronic device to:
identify a change from the folded state to unfolded state, after obtaining the second illumination value using the illumination sensor,
while the foldable housing is in the unfolded state, obtain a third illumination value corresponding to the first illumination value using the illumination sensor, and
obtain data (270) indicating a relationship between the first illumination value and the second illumination value based on obtaining the third illumination value corresponding to the first illumination value.

7. The electronic device of any one of claims 1 to 6, wherein the instructions, when executed by the at least one processor individually or collectively, cause the electronic device to:
while the foldable housing is in the folded state, identify the first illumination value based on the data and the second illumination value obtained from the illumination sensor located at the same side as the first display, and
estimate an ambient light value based on the first illumination value.

8. The electronic device of any one of claims 1 to 7, wherein the instructions, when executed by the at least one processor individually or collectively, cause the electronic device to:
control the brightness of the first display based on the ambient light value, in response to a change from the folded state to the unfolded state.

9. The electronic device of any one of claims 1 to 8, comprising a hall sensor (232) for identifying an angle between the first housing and the second housing, wherein the instructions, when executed by the at least one processor individually or collectively, cause the electronic device to:
identify that the foldable housing is moved from the unfolded state to the folded state using the hall sensor; and/or
identify that the foldable housing is moved from the folded state to the unfolded state using the hall sensor.

10. The electronic device of any one of claims 1 to 9, wherein the instructions, when executed by the at least one processor individually or collectively, cause the electronic device to:
temporarily refrain from obtaining the data (270) indicating the relationship between the first illumination value and the second illumination value in a second state distinct from the first state in which the third illumination value corresponding to the first illumination value is obtained.

11. The electronic device of any one of claims 1 to 10, wherein the instructions, when executed by the at least one processor individually or collectively, cause the electronic device to:
obtain the third illumination value indicating an average value among a plurality of illumination values identified based on a specified period using the illuminance sensor while the foldable housing is in the unfolded state, based on identifying that the foldable housing is moved from the folded state to the unfolded state using the hall sensor.

12. The electronic device of any one of claims 1 to 11, wherein the instructions, when executed by the at least one processor individually or collectively, cause the electronic device to:
estimate the first illumination value using the connection information, when the second illumination value is identified using the illuminance sensor, while the foldable housing is in the unfolded state, and
control brightness of the first display based on the first illumination value, in response to identifying that the foldable housing is moved from the unfolded state to the folded state using the hall sensor, based on estimating the first illumination value.

13. The electronic device of any one of claims 1 to 12, wherein the instructions, when executed by the at least one processor individually or collectively, cause the electronic device to:
display a first user interface (601) indicating obtaining a plurality of illumination values using the illuminance sensor, on the first display while the foldable housing is in the unfolded state, and
display a second user interface (606) for guiding to temporarily refrain from displaying the first user interface and change from the unfolded state to the folded state, based on obtaining the first illumination value using the illuminance sensor while the foldable housing is in the unfolded state.

14. A method of operating an electronic device (101), comprising:
obtaining a first illumination value corresponding to light received from outside of the electronic device using an illumination sensor (231) while a foldable housing is in an unfolded state (305),
while the foldable housing is in the unfolded state, controlling brightness of a first display (220) based on the first illumination value obtained from the illumination sensor located at the same side as the first display,
obtaining a second illumination value corresponding to light received from outside of the electronic device using the illumination sensor while the foldable housing is in a folded state (300), and
while the foldable housing is in the folded state, controlling brightness of a second display (225) located at a side opposite to the first display based on the second illumination value obtained from the illumination sensor located at the same side as the first display.

15. A non-transitory computer readable storage medium storing a program including instructions,
wherein the instructions, when executed by at least one processor of an electronic device individually or collectively, cause the electronic device to:
obtain a first illumination value corresponding to light received from outside of the electronic device using an illumination sensor (231) while a foldable housing is in an unfolded state (305),
while the foldable housing is in the unfolded state, control brightness of a first display (220) based on the first illumination value obtained from the illumination sensor located at the same side as the first display,
obtain a second illumination value corresponding to light received from outside of the electronic device using the illumination sensor while the foldable housing is in a folded state (300), and
while the foldable housing is in the folded state, control brightness of a second display (225) located at a side opposite to the first display based on the second illumination value obtained from the illumination sensor located at the same side as the first display.
